# FASCICULE DE BREVET EUROPEEN

(11) **EP 1 682 463 B1**
(45) Date de publication et mention de la délivrance du brevet: **11.04.2007**
(21) Numéro de dépôt: 04817151.6
(22) Date de dépôt: 05.10.2004
(51) Int. Cl.: C04B 35/536, B32B 18/00, H01M 2/14

(54) **PROCEDE DE FABRICATION D OBJETS COMPOSITES UTILISANT DU GRAPHITE ET DE LA VERMICULITE EXPANSES**
VERFAHREN ZUR HERSTELLUNG VON VERBUNDKÖRPERN AUS BLÄHGRAPHIT UND VERMICULIT
METHOD FOR PRODUCING COMPOSITE OBJECTS USING EXPANDED GRAPHITE AND VERMICULITE

(30) Priorité: 06.10.2003 FR 0311685
(43) Date de publication de la demande: 26.07.2006
(73) Titulaire: 6T-MIC Ingenieries, 81000 Albi (FR)
(72) Inventeur: DA SILVA, Serge, F-66100 Perpignan (FR); GROS, Pierre, F-31770 Colomiers (FR); LEGUEN, Cédric, F-31280 Dremil Lafage (FR); PROSDOCIMI, Jacques, F-31170 Tournefeuille (FR); PUYBOUFFAT, Sylvain, F-31130 Balma (FR)
(74) Mandataire: Lassiaille, Christian Michel
(86) Numéro de dépôt international: PCT/FR2004/002508
(87) Numéro de publication internationale: WO 2005/035463

(56) Documents cités:
- EP-A- 0 568 270
- WO-A-02/069415
- US-A- 5 247 005
- US-A- 5 288 429
- US-A- 5 607 889

## Description

L'invention concerne un procédé pour la fabrication d'objets composites qui comprennent au moins deux parties distinctes ayant des propriétés et/ou fonctions différentes, voire antagonistes.

Ces propriétés et/ou fonctions différentes, d'une part obligent à employer des matériaux différents pour réaliser lesdites parties de l'objet, et d'autre part conduisent à des procédés de fabrication souvent complexes et longs, qui incluent notamment des étapes de réalisation indépendante des deux parties de l'objet puis d'assemblage desdites parties.

A titre d'exemples d'objets composites connus, on peut citer des objets aussi divers et variés que :
- les cellules électrochimiques, qui comprennent, d'une part, deux électrodes présentant notamment des propriétés de conduction électronique et d'hydrophobie, et d'autre part, un milieu échangeur d'ions, tel que l'eau ou une membrane poreuse ayant des propriétés de conduction ionique (et non électronique) et d'hydrophilie, lequel milieu sépare les électrodes et intègre une solution électrolytique. On connaît notamment la cellule électrochimique décrite par WO 02/069415, dont les électrodes sont constituées chacune d'une feuille de graphite souple obtenue à partir de graphite expansé puis laminé (compression uniaxiale entre des rouleaux presseurs, selon une direction de compression notée "c"), laquelle feuille subit ensuite une opération d'emboutissage qui déforme ses plans de carbone (initialement parallèles) et crée des canaux transversaux selon la direction "c", en vue de pallier les inconvénients résultant de l'anisotropie du Papyex® (résistivité électronique et thermique selon la direction "c"). La face de la feuille destinée à être en contact avec la membrane d'échange d'ions subit ensuite divers traitements : traitement catalytique par dépôt d'un métal catalytique (métal noble tel que le platine), traitement hydrophobe par un additif résistant à l'eau, tel que les polymères fluorés (et notamment le polytétrafluoroéthylène dit Téflon®). Par ailleurs, la membrane d'échange d'ions est réalisée à partir de toiles de verre, de polyoléfines poreux tels que le polyéthylène, le polypropylène ... La membrane et les électrodes doivent ensuite être assemblées. La réalisation d'une telle cellule est à l'évidence complexe et longue (nombre d'opérations et de traitements important) ; elle nécessite des installations lourdes et coûteuses, et emploie une multitude de matériaux (divers polymères, métaux nobles ...) ;
- les moules de fonderie, utilisés pour mouler des pièces métalliques à partir d'alliages en fusion, et qui comprennent une partie interne réfractaire destinée à être en contact avec l'alliage en fusion. Il peut être avantageux de doter de tels moules d'une partie externe isolante, pour permettre leur manipulation au cours des opérations de moulage sans risque de brûlure. On connaît notamment les moules en sable, ou autre matériau réfractaire non siliceux (zircon, chromite, olivine, bauxite). Un tel moule est construit en deux parties, correspondant chacune sensiblement à une moitié d'un modèle à reproduire, par compression de sable dans un châssis. Le sable est ainsi serré entre le châssis et le modèle, puis le modèle est retiré. La cohésion du sable est assurée par un liant, notamment choisi parmi l'argile humide, les gels de silice, les résines synthétiques, les ciments ..., ou par des liaisons de type céramique que l'on crée à haute température. Le châssis est ensuite doublé d'un caisson externe isolant. Outre la complexité d'un tel procédé, il convient de noter que la manipulation du sable est contraignante et dangereuse (les poudres de silicate, volatiles, obligent à porter un masque), et que le sable, certes réfractaire, présente des propriétés quelque peu désavantageuses : sa structure en grain conduit à l'obtention de moules d'état de surface grossier qu'il convient de parfaire par des opérations supplémentaires de finition (polissage par exemple) ; ses propriétés thermiques ne permettent pas de contrôler la vitesse de refroidissement de l'alliage en fusion et peuvent rendre délicates les opérations de coulée de l'alliage et éventuellement dégrader les caractéristiques mécaniques de la pièce moulée obtenue ; un moule en sable ne sert qu'une fois, et le recyclage du sable est rendu difficile voir impossible par la présence des liants ;
- les convertisseurs héliothermiques, dont l'objet est de convertir le rayonnement solaire en énergie thermique, et qui comprennent usuellement :
   - une plaque d'absorption, apte à absorber les rayonnements thermiques solaires et à conduire la chaleur, généralement réalisée en cuivre et dont la face exposée aux rayonnements solaires, dite face d'absorption, est traitée par anodisation au chrome noir (très toxique) pour présenter un coefficient d'absorption et une sélectivité améliorés,
   - un échangeur de chaleur agencé sous la plaque, formé par un circuit tubulaire transportant un fluide caloporteur. Le(s) tube(s) du circuit sont soudé(s) sur la face de la plaque opposée à la face d'absorption, dite face de transfert. La surface réelle d'échange thermique est limitée à la zone de contact entre le(s) tube(s) et la face de transfert, zone qui est linéique pour un tube de section circulaire,
   - un caisson dans lequel sont agencés la plaque et l'échangeur, et dont une face, orientée vers le soleil, est prévue transparente aux rayonnements solaires et de préférence adaptée pour créer un effet de serre à l'intérieur du caisson, tandis que les autres faces du caisson sont doublées d'un complexe isolant formé d'une épaisseur de mousse de polyuréthanne intercalée entre deux films réflecteurs en aluminium, en vue d'éviter toute déperdition de chaleur par ces faces.
Il est clair, compte tenu de la complexité d'un tel objet, que son procédé de fabrication est long et onéreux, tant il comprend d'étapes, utilise des installations lourdes et emploie des matériaux coûteux : fabrication de la plaque par moulage, laminage ..., traitement d'anodisation de la plaque, fabrication du circuit tubulaire par extrusion, pliage ..., divers traitements anticorrosion de la plaque et du circuit, fabrication du caisson, fabrication des films réflecteurs, doublage du caisson par injection de mousse polyuréthanne et agencement des films réflecteurs ..., assemblage de l'ensemble des éléments du convertisseur, avec, notamment, soudage du circuit échangeur sur la plaque ...

L'invention vise à proposer un procédé de fabrication de tels objets composites qui soit simple, rapide et peu coûteux.

Dans une version préférée, l'invention vise notamment à proposer un procédé permettant, en une seule opération, de former et d'assembler deux parties de l'objet distinctes présentant des propriétés et/ou des fonctions différentes voire antagonistes.

Un autre objectif de l'invention est de fournir des objets composites dont les propriétés et/ou fonctions connues sont améliorées ou qui offrent de nouveaux avantages.

L'invention concerne un procédé de fabrication d'un objet composite comprenant au moins deux parties distinctes ayant des propriétés et/ou fonctions différentes, caractérisé en ce que :
- on forme au moins une épaisseur comprenant plus de 70% en poids d'un matériau expansé choisi parmi les graphites expansés,
- on forme au moins une autre épaisseur comprenant plus de 70% en poids d'un autre matériau expansé choisi parmi les vermiculites expansées,
- puis on comprime ensemble les épaisseurs formées de façon à les consolider, chaque épaisseur consolidée correspondant à l'une des parties de l'objet.

A noter que les épaisseurs peuvent être formées simultanément ou successivement dans un ordre ou l'autre selon l'objet à fabriquer. Dans toute la suite, les termes "épaisseur de graphite" désignent une épaisseur comprenant plus de 70% en poids d'un matériau expansé choisi parmi les graphites expansés ; de même, les termes "épaisseur de vermiculite" désignent une épaisseur comprenant plus de 70% en poids d'un matériau expansé choisi parmi les vermiculites expansées. L'état, consolidé ou non, de l'épaisseur considérée est précisé si nécessaire.

La démarche inventive ayant présidé à la conception de l'invention a ainsi consisté, d'une part, à choisir d'utiliser au moins deux matériaux expansés pour la réalisation de parties d'objet distinctes aux fonctions et/ou propriétés différentes, et, d'autre part, à imaginer qu'il était possible de comprimer ensemble des épaisseurs distinctes de tels matériaux et d'obtenir ainsi la consolidation de chaque épaisseur, en dépit des différences structurelles (en terme d'agencement cristallin, de granulométrie, de mode de consolidation ...), mécaniques (résistance à la compression, viscosité ...), etc., desdits matériaux. Contre toute logique, les inventeurs ont trouvé qu'il était même possible de contrôler les densités respectives des deux épaisseurs, notamment en sélectionnant le profil granulométrique de la vermiculite expansée utilisée. On parvient ainsi à obtenir une épaisseur de vermiculite consolidée alors que l'épaisseur de graphite -qui se consolide en premier et absorbe, avant sa consolidation, la plus grande partie de la contrainte de compression appliquée- ne présente qu'une densité faible proche de sa densité minimale de consolidation (de l'ordre de 30 kg/m³).

Les inventeurs ont également pu constater, de façon étonnante, que la compression de deux épaisseurs adjacentes, c'est-à-dire présentant des faces en contact, permettait d'obtenir des épaisseurs consolidées solidaires l'une de l'autre, y compris dans le cas d'une compression selon une unique direction orthogonale auxdites épaisseurs, c'est-à-dire orthogonale à leur interface. Ce résultat apparaît surprenant, si l'on considère que le graphite se consolide en premier et en une structure ordonnée lamellaire, dont les feuillets parallèles peuvent glisser les uns par rapport aux autres et confèrent au graphite recomprimé un caractère lubrifiant, tandis que la consolidation de la vermiculite n'intervient qu'après consolidation du graphite et conduit à une structure non ordonnée. On aurait donc pu s'attendre à ce que la vermiculite, qui de surcroît présente une granulométrie supérieure à celle du graphite, ne puisse pas venir s'ancrer à la surface lisse et glissante de l'épaisseur consolidée de graphite. Une solidarisation s'opère pourtant, et on constate a posteriori une légère imbrication des plans de graphite et des grains de vermiculite à l'interface des épaisseurs consolidées.

Le procédé selon l'invention permet de réaliser deux parties distinctes d'un objet, ayant des propriétés et/ou fonctions différentes voire antagonistes, par des opérations simples et en faible nombre (formation puis compression simultanée d'épaisseurs). Il permet en particulier de réunir, en une seule opération, à la fois des actions de formage et d'assemblage desdites parties. Le procédé selon l'invention est particulièrement simple et rapide ; il nécessite peu de main d'oeuvre.

Outre ces avantages, il convient de noter que le graphite et la vermiculite recomprimés sont aisément recyclables (il suffit de les exfolier de nouveau au moyen d'une solution d'intercalation).

Avantageusement et selon l'invention, au moins deux des épaisseurs sont formées adjacentes. En variante, les épaisseurs sont formées de façon à ne présenter aucune surface de contact. Tel est le cas si l'on intercale des moyens de séparation (feuille de séparation par exemple, en un matériau approprié) entre lesdites épaisseurs ou si l'objet à fabriquer comprend, outre ses deux parties distinctes initialement définies, une troisième partie qui vient s'intercaler entre les deux premières, et que l'on place entre les deux épaisseurs avant de les comprimer.

Selon l'invention, on comprime ensemble les épaisseurs formées selon plusieurs directions, et notamment selon trois directions orthogonales. En variante, les épaisseurs formées sont comprimées selon une unique direction, et notamment selon une direction sensiblement orthogonale à un plan frontal d'une épaisseur ou à un plan d'interface entre lesdites épaisseurs. Le choix entre ces deux procédés dépend essentiellement des propriétés souhaitées pour l'épaisseur de graphite : une compression uniaxiale (selon une unique direction) des épaisseurs conduit à l'obtention d'une épaisseur consolidée de graphite fortement anisotrope (les propriétés obtenues selon la direction "c" de compression diffèrent de celles obtenues selon toute direction "a" orthogonale à la direction "c"), tandis qu'une compression selon toutes les directions (résultat obtenu, par exemple, en comprimant selon trois directions orthogonales) conduit à l'obtention d'une épaisseur consolidée de graphite faiblement anisotrope. En faisant varier les contraintes de compression appliquées sur les épaisseurs selon chaque direction, on peut ajuster et contrôler les propriétés de l'épaisseur consolidée de graphite.

Dans une version de l'invention, on soumet les épaisseurs formées à une unique opération de compression selon chaque direction. En d'autres termes, on comprime les épaisseurs une seule fois selon chaque direction.

Avantageusement et selon l'invention, on soumet les épaisseurs formées à une unique opération de compression, que celles-ci soient comprimées selon une seule direction ou selon plusieurs directions simultanément. Le formage et l'assemblage selon l'invention des deux parties distinctes de l'objet s'effectue dans ce cas en une seule opération.

En variante, on soumet les épaisseurs formées à une pluralité d'opérations distinctes de compression selon au moins une direction. En particulier, on effectue, selon cette direction, une première compression adaptée pour consolider les épaisseurs formées en vue de permettre leur manipulation, et, ultérieurement, une deuxième compression adaptée pour conférer une densité souhaitée (supérieure à la densité minimale de consolidation) à l'une desdites épaisseurs.

Avantageusement et selon l'invention, lors de la compression des épaisseurs formées, on imprime sur au moins une face, dite face extérieure, d'au moins une épaisseur de graphite, des formes en creux ouvertes, dites formes de capture, adaptées pour piéger des ondes infrarouges. Les formes de capture présentent notamment au moins une dimension frontale (ouverture) comprise entre 1 µm et 1 cm et une profondeur comprise entre 1 µm et 5 cm. On entend par "face extérieure" une face de l'épaisseur de graphite apparente depuis l'extérieur de l'objet, de sorte qu'elle peut être exposée à une source de rayonnements infrarouges.

Grâce à la sélectivité optique et à la bonne diffusivité thermique du graphite expansé recomprimé, il est possible de réguler la température de l'épaisseur consolidée de graphite en exposant au moins l'une de ses faces extérieures à un rayonnement infrarouge. La présence des formes de capture améliore l'apport de calories par un tel chauffage par rayonnement : une onde incidente pénétrant à l'intérieur d'une forme de capture subit de multiples réflexions sur les faces en regard de la forme de capture ; l'énergie de l'onde est finalement presque intégralement absorbée par le graphite au niveau d'une telle forme de capture (la proportion du flux incident qui est réfléchie vers l'extérieur de la forme et donc éventuellement perdue est très faible).

Par ailleurs, en augmentant la surface de la face extérieure, la présence des formes de capture contribue également à faciliter non seulement l'apport de calories, mais aussi l'évacuation de calories lors d'un refroidissement de l'épaisseur de graphite. Finalement, les formes de capture diminuent encore l'inertie thermique de l'épaisseur de graphite, déjà faible du fait des propriétés intrinsèques du graphite expansé recomprimé.

Les formes de capture imprimées peuvent être des empreintes linéaires telles des fentes, rainures, sillons ... droit(e)s ou courbes, de section circulaire, carrée, triangulaire ..., ou encore des empreintes ponctuelles de forme pyramidale, conique, hémi-sphérique, cylindrique (section carrée ou circulaire) ... La géométrie des formes imprimées est choisie en fonction des longueurs d'onde à absorber et de la réponse thermique souhaitée pour l'épaisseur consolidée de graphite.

Il est également possible, lors de la compression des épaisseurs formées, d'imprimer, sur au moins une face extérieure d'une épaisseur (de graphite ou, de préférence, de vermiculite), des formes de capture adaptées pour piéger des ondes sonores ou encore des ondes électromagnétiques, selon la destination de l'objet.

Dans tous les cas, l'invention permet de doter un objet (ou une partie d'un objet), de pièges à ondes, et ce de façon simple, rapide, économique ... sans que ces fonctions supplémentaires de l'objet ne nécessitent l'ajout d'organes ou moyens supplémentaires ou la mise en oeuvre d'une étape supplémentaire dans le procédé de fabrication. Les pièges à ondes sont en effet réalisés au sein des épaisseurs de graphite ou vermiculite, en même temps que la consolidation de ces épaisseurs.

Avantageusement et selon l'invention, on utilise, à titre de graphite expansé, un graphite naturel expansé, éventuellement broyé (mais de préférence tel qu'obtenu après exfoliation).

A noter que, selon l'invention, les épaisseurs formées peuvent contenir, outre les matériaux expansés définis précédemment, des additifs choisis parmi des matériaux expansés ou non, en fonction des propriétés et fonctions des parties d'objet à réaliser. En particulier, l'épaisseur de vermiculite peut comprendre moins de 30 % en poids d'additifs choisis parmi la perlite, les matériaux expansés obtenus à partir d'oxydes tels que SiO₂ ou Al₂O₃, les kandites, les illites, les smectites, les kaolinites.

L'invention concerne en particulier un procédé de fabrication d'une cellule électrochimique. Pour cette application, on forme une épaisseur de vermiculite expansée entre deux épaisseurs de graphite expansé, puis on comprime ensemble les épaisseurs formées. Chaque épaisseur consolidée de graphite forme une électrode, tandis que l'épaisseur consolidée de vermiculite forme une membrane d'échange d'ions entre lesdites électrodes. Avantageusement et selon l'invention, chaque épaisseur de graphite expansé formée comprend moins de 20 % en poids d'une poudre d'un matériau catalytique (métal ou oxyde de métal par exemple), en vue de catalyser et/ou favoriser les réactions électrochimiques.

La cellule électrochimique fabriquée selon l'invention est dite cellule sèche : la solution électrolytique -ou le solvant, lorsque les réactifs cristallisés sont disposés au préalable dans l'épaisseur de vermiculite expansée- est rajouté(e) à la demande au moment de l'utilisation de la cellule. L'imprégnation de la membrane peut être aisément effectuée par tout moyen adapté, par exemple à l'aide d'une pipette.

A noter qu'une telle cellule sèche peut servir de réacteur électrochimique, de pile à combustible, mais aussi de cellule bioélectrochimique telle qu'une cellule de mesure du taux de glucose dans le sang. Dans les cellules de mesure du taux de glucose connues, le dépôt d'une goutte de sang sur une languette amovible prévue à cet effet, entraîne l'activation d'une enzyme présente sur une électrode de la cellule et la génération subséquente d'un courant électrique. L'activation de l'enzyme et l'intensité du courant produit sont directement proportionnelles au taux de glucose présent dans le sang. Dans les cellules antérieures connues, les enzymes, adsorbées sous forme lyophilisée à la surface d'une électrode, finissent par se détacher. Avantageusement et selon l'invention, l'épaisseur de vermiculite formée comprend des enzymes lyophilisées. En d'autres termes, les enzymes sont directement mélangées à la vermiculite expansée avant formation et compression des épaisseurs, de sorte qu'elles sont immobilisées à l'intérieur de l'épaisseur consolidée de vermiculite (membrane) ; la durée de vie de la cellule est considérablement prolongée.

Avantageusement et selon l'invention, on comprime ensemble les épaisseurs formées selon trois directions orthogonales, en vue de réduire l'anisotropie des épaisseurs de graphite et d'obtenir ainsi des électrodes présentant une bonne conductivité électronique dans toutes les directions, y compris dans une direction orthogonale au plan d'interface entre l'électrode et la membrane.

Avantageusement et selon l'invention, on comprime les épaisseurs formées de telle sorte que les deux épaisseurs consolidées de graphite présentent une densité comprise entre 30 et 60 kg/m³. En d'autres termes, les épaisseurs sont faiblement comprimées pour permettre de disposer d'électrodes de graphite poreuses. La réaction électrochimique à chaque électrode s'effectue ainsi non seulement à l'interface de l'électrode de graphite et de la membrane de vermiculite, mais aussi à l'intérieur même de l'électrode. La surface spécifique où surviennent les réactions électrochimiques, et par conséquent le rendement de la cellule électrochimique, sont considérablement augmentés. L'invention permet donc aussi d'améliorer les propriétés des parties d'objet réalisées.

Avantageusement et selon l'invention, en variante ou en combinaison, pour au moins l'une des épaisseurs de graphite, on forme des microsillons sur une face de ladite épaisseur, dite face intérieure, orientée vers l'épaisseur de vermiculite. Pour ce faire, on place des fils destructibles (destructibles par chauffage ou réaction chimique ...) ou amovibles entre l'épaisseur de graphite expansé et l'épaisseur de vermiculite expansée lors de leur formation, lesquels fils sont détruits ou retirés une fois les épaisseurs consolidées. Les microsillons permettent, non seulement d'augmenter la surface spécifique de réaction sur l'électrode, mais aussi de former, à l'interface entre l'électrode et la membrane d'échange d'ions, des microcanalisations utilisées pour créer une circulation de réactifs électrolytiques le long de l'électrode et permettre un fonctionnement en continu de la cellule électrochimique.

Avantageusement et selon l'invention, on incorpore des organes de chauffage/refroidissement, hydrauliques ou électriques par exemple, dans au moins l'une des épaisseurs de graphite expansé lors de sa formation, en vue d'effectuer une régulation thermique des réactifs.

Le chauffage peut également s'effectuer sans contact à l'aide d'au moins un générateur infrarouge situé à l'extérieur et à distance de la cellule électrochimique, grâce à la sélectivité optique du graphite expansé recomprimé. On imprime alors, de préférence, des formes de capture sur au moins une face extérieure d'au moins l'une des épaisseurs de graphite, en vue d'augmenter l'absorption des rayonnements infrarouges. La face extérieure imprimée est typiquement la face extérieure frontale de l'électrode, opposée à la face intérieure orientée vers la membrane. Dans cette application, les formes de capture imprimées présentent de préférence au moins une dimension frontale (ouverture) comprise entre 1 µm et 5 mm, et une profondeur comprise entre 1 µm et 1 mm.

L'invention offre ainsi la possibilité de réguler la température des réactifs dans la cellule et donc de contrôler les cinétiques de réactions en jeu et d'améliorer considérablement les rendements en maîtrisant certains facteurs limitants : évacuation des calories produites dans le cas d'une réaction exothermique, apport de calories dans le cas d'une réaction endothermique.

L'invention concerne également un procédé de fabrication d'un moule, et notamment d'un moule de fonderie. Pour cette application, on recouvre un modèle (forme que l'on souhaite reproduire ensuite au moyen du moule) d'une épaisseur de graphite expansé, puis on forme une épaisseur de vermiculite expansée recouvrant au moins partiellement l'épaisseur de graphite, puis on comprime ensemble les épaisseurs formées. L'épaisseur de graphite, réfractaire, correspond à la partie du moule destinée à recevoir l'alliage métallique en fusion ; l'épaisseur de vermiculite forme une protection isolante au moins sur une partie du moule, et permet sa manipulation sans risque de brûlure. A noter que l'invention s'applique à la réalisation de tous types de moules (elle s'applique quel que soit le matériau qu'est destiné à recevoir le moule -résine thermodurcissable, etc.-), mais qu'elle est particulièrement avantageuse lorsqu'une protection isolante du moule est souhaitable.

Outre sa simplicité et sa rapidité d'exécution, le procédé selon l'invention présente de multiples avantages : possibilité de réaliser des moules aux formes complexes, en une seule opération ; précision dimensionnelle et excellente qualité de l'état de surface des moules obtenus, qui permettent de s'affranchir des opérations usuelles de finition (usinage, polissage ...) ; facilité de démoulage due au caractère lubrifiant du graphite expansé recomprimé ; grande pérennité des moules obtenus, qui peuvent être utilisés un très grand nombre de fois et conservent notamment un bon état de surface en dépit des agressions thermiques et éventuellement chimiques (corrosion, oxydation ...) subies ; possibilité de contrôler la vitesse de refroidissement et de consolidation de l'alliage en fusion, comme expliqué ci-dessous ...

Avantageusement et selon l'invention, on comprime ensemble les épaisseurs formées de telle sorte que l'épaisseur consolidée de graphite présente une densité supérieure à 40 kg/m³ pour un moule destiné à des applications basse température (matériaux à mouler du type plâtre, plastique, élastomère) et, de préférence une densité supérieure à 100 kg/m³ pour un moule destiné à des applications haute température tel un moule de fonderie (matériaux à mouler du type alliage en fusion), une densité supérieure à 40 kg/m³ garantissant, en tout état de cause, une totale imperméabilité du moule vis-à-vis des matériaux à mouler les plus fins et les plus liquides, et un état de surface particulièrement fin. A noter qu'une densité supérieure à 100 kg/m³ est préférée dans le cas d'un moule destiné à des applications haute température, car elle confère une meilleure diffusivité thermique à l'épaisseur consolidée de graphite et offre donc la possibilité de contrôler efficacement la température du moule et la vitesse de refroidissement du matériau à mouler.

Avantageusement et selon l'invention, on place des organes de chauffage/refroidissement, tels qu'une partie d'un circuit électrique ou hydraulique, dans l'épaisseur de graphite expansé lors de sa formation. Les contraintes de compression appliquées dans ce cas sont choisies suffisamment faibles pour ne pas endommager les organes de chauffage/refroidissement et notamment adaptées pour conférer à l'épaisseur consolidée de graphite une densité inférieure à 400 kg/m³. Le graphite expansé étant un bon conducteur thermique, qui présente une excellente diffusivité thermique, les moyens de chauffage/refroidissement sont utilisés pour réguler la température du moule et donc contrôler la vitesse de refroidissement et de consolidation de l'alliage en fusion.

En variante, on forme, directement dans la masse de graphite, au moins une canalisation adaptée pour recevoir un fluide de chauffage/refroidissement, et qui constitue donc (avec ce fluide et des moyens de circulation et de chauffage/refroidissement dudit fluide) des moyens de chauffage/refroidissement du moule. Pour ce faire, on place au moins un tube destructible (par fusion ou réaction chimique ...) ou amovible (le tube est dans ce cas prévu souple pour permettre son retrait quelle que soit la forme de la canalisation réalisée) dans l'épaisseur de graphite expansé lors de sa formation, le(s)dit(s) tubes étant détruit(s) ou retiré(s) une fois l'épaisseur de graphite consolidée. Les contraintes de compression sont choisies suffisamment élevées pour obtenir une densité de graphite conférant étanchéité et tenue mécanique à chaque canalisation formée. Ainsi, on comprime de préférence les épaisseurs de telle sorte que l'épaisseur consolidée de graphite présente une densité supérieure à 150 kg/m³.

Le chauffage du moule, et de façon générale la régulation de sa température, peut également s'effectuer sans contact à l'aide de générateurs infrarouges situés à distance du moule. Dans ce mode de réalisation, l'épaisseur de vermiculite est formée de façon à ne pas recouvrir l'ensemble des faces de l'épaisseur de graphite et à laisser découverte au moins une face de cette dernière, dite face extérieure, qui soit apparente durant l'utilisation du moule, en vue de son exposition aux rayonnements infrarouges. Avantageusement et selon l'invention, on imprime des formes de capture sur au moins une face extérieure de l'épaisseur de graphite. Dans cette application, les formes de capture imprimées présentent de préférence au moins une dimension frontale (ouverture) comprise entre 1 mm et 2 cm et une profondeur comprise entre 1 mm et 10 cm.

L'invention concerne également un procédé de fabrication d'un convertisseur héliothermique. Dans cette application, on forme une épaisseur de graphite expansé dans laquelle on aménage au moins une canalisation adaptée pour recevoir un fluide caloporteur, on forme une épaisseur de vermiculite recouvrant partiellement l'épaisseur de graphite et laissant découverte au moins une face de cette dernière, dite face d'absorption, puis on comprime ensemble les épaisseurs formées. Pour obtenir la(les) canalisation(s), on place au moins un tube permanent, métallique par exemple et notamment en cuivre, dans l'épaisseur de graphite expansé, étant précisé que l'on entend par "tube permanent" un tube adapté pour recevoir ensuite un fluide caloporteur et qui est laissé dans l'épaisseur de graphite consolidée. En variante, on place au moins un tube destructible ou amovible dans l'épaisseur de graphite expansé, le(s)dit(s) tube(s) étant détruit(s) ou retiré(s) une fois l'épaisseur de graphite consolidée.

L'épaisseur consolidée de graphite, dont au moins une face n'est pas recouverte par de la vermiculite et peut donc absorber les rayonnements solaires, réalise un échangeur thermique particulièrement performant. En effet, le graphite expansé recomprimé possède une excellente diffusivité thermique (meilleure que celle des métaux actuellement utilisés) et une très faible inertie thermique (temps de réponse amélioré). L'épaisseur consolidée de vermiculite forme une plaque ou un caisson isolant(e).

Le taux de compression des épaisseurs est choisi en fonction des propriétés thermiques et mécaniques souhaitées pour l'épaisseur de graphite. Dans le cas où les canalisations de fluide caloporteur sont formées directement dans la masse de graphite (en utilisant des tubes destructibles ou amovibles), le taux de compression est choisi suffisamment élevé pour conférer à l'ensemble une tenue mécanique correcte, compatible avec les contraintes subies (pression du fluide dans les canalisations, connectique hydraulique, dilatations et contractions dues à des variations importantes de températures (été-hiver)). En particulier, on comprime les épaisseurs de telle sorte que l'épaisseur de graphite présente une densité supérieure à 150 kg/m³.

Dans le cas où les canalisations de fluide caloporteur sont constituées de tubes rapportés (métalliques par exemple), il n'est pas nécessaire que le graphite participe à la rigidité mécanique de l'ensemble. On privilégie alors la recherche d'un gain de poids et d'une amélioration des propriétés thermiques de l'échangeur et du rendement énergétique du convertisseur : le taux de compression peut être choisi relativement faible. En particulier, on comprime les épaisseurs de telle sorte que l'épaisseur de graphite présente une densité inférieure à 400 kg/m³.

A noter que, dans les deux cas, on comprime de préférence les épaisseurs une seule fois et selon une unique direction, en vue de simplifier le procédé de fabrication.

Outre sa simplicité et sa rapidité d'exécution, le procédé selon l'invention présente l'avantage de fournir un convertisseur héliothermique au rendement amélioré, compte tenu des propriétés thermiques avantageuses du graphite expansé recomprimé et de la structure même de l'échangeur thermique. Que les canalisations de l'échangeur soient formées dans la masse même du graphite ou constituées de tubes rapportés, la surface d'échange thermique correspond à la totalité de la surface cylindrique des canalisations, et non à une seule ligne de contact entre une surface cylindrique et une plaque, comme tel est le cas dans les convertisseurs antérieurs. De surcroît, le procédé selon l'invention permet de s'affranchir de tout traitement électrochimique toxique ou dangereux en vue d'une absorptivité sélective et améliorée (traitement actuellement réalisé à l'oxyde de chrome, très toxique et à terme proscrit), et fournit un convertisseur plus léger, plus simple et plus fiable. Les risques de dysfonctionnement et les coûts de maintenance du convertisseur sont considérablement réduits.

La sélectivité optique aux infrarouges de l'absorbeur en graphite favorise également l'effet de serre nécessaire à la conversion héliothermique. Avantageusement et selon l'invention, lors de la compression des épaisseurs formées, on imprime des formes de capture adaptées au piégeage des rayonnements infrarouges solaires sur la face d'absorption de l'épaisseur de graphite. Les formes imprimées présentent de préférence au moins une dimension frontale (ouverture) comprise entre 10 µm et 1 cm et une profondeur comprise entre 1 mm et 1 cm.

Ces formes de capture augmentent considérablement non seulement la surface d'absorption de l'absorbeur en graphite, mais également la sélectivité optique géométrique aux longueurs d'ondes situées dans les infrarouges.

Elles permettent de plus de renforcer ponctuellement, et par voie de conséquence globalement, la rigidité et la tenue mécanique de l'épaisseur consolidée de graphite, en augmentant la densité de graphite à proximité de chaque forme de capture.

Il est préférable de décaler les formes de capture par rapport aux canalisations de fluide caloporteur, en vue non seulement de limiter les contraintes de compression sur ces canalisations (contraintes qui seraient augmentées par la présence des matrices d'impression des formes de capture en regard des canalisations) mais aussi d'optimiser le profil mécanique et thermique de l'épaisseur consolidée de graphite.

L'invention s'étend à un objet composite comprenant au moins deux parties distinctes ayant des propriétés et/ou fonctions différentes, caractérisé en ce que l'une des parties comporte une épaisseur consolidée comprenant plus de 70% en poids d'un matériau expansé recomprimé choisi parmi les graphites expansés, et en ce qu'une autre des parties comporte une autre épaisseur consolidée comprenant plus de 70% en poids d'un autre matériau expansé recomprimé choisi parmi les vermiculites expansées. Un tel objet peut avantageusement être obtenu par un procédé dans lequel les épaisseurs de graphite et de vermiculite sont comprimées ensemble, et qui, de préférence, ne comprend qu'une seule étape de compression (uniaxiale ou multiaxiale).

L'invention concerne en particulier une cellule électrochimique, qui comprend au moins une épaisseur consolidée de vermiculite expansée recomprimée, intercalée entre deux épaisseurs consolidées de graphite expansé recomprimé. Les épaisseurs consolidées de graphite présentent de préférence une densité comprise entre 30 et 60 kg/m³, de sorte qu'elles sont poreuses. Avantageusement et selon l'invention, au moins l'une des épaisseurs consolidées de graphite présente des microsillons sur une face, dite face intérieure, orientée vers l'épaisseur de vermiculite. Avantageusement et selon l'invention, au moins l'une des épaisseurs consolidées de graphite intègre des organes de chauffage/refroidissement. En variante ou éventuellement en combinaison, au moins l'une des épaisseurs consolidées de graphite présente, sur au moins une face extérieure, des formes ouvertes imprimées en creux, dite formes de capture, adaptées pour piéger des ondes infrarouges, lesquelles formes ont de préférence au moins une dimension frontale comprise entre 1 µm et 5 mm et une profondeur comprise entre 1 µm et 1 mm. Avantageusement et selon l'invention, l'épaisseur consolidée de vermiculite comprend des enzymes lyophilisées.

L'invention concerne également un moule, et notamment un moule de fonderie, qui comprend au moins une épaisseur consolidée de graphite expansé recomprimé, qui délimite une empreinte correspondant à un objet à reproduire par moulage, et une épaisseur consolidée de vermiculite expansée recomprimée recouvrant au moins partiellement ladite épaisseur de graphite. L'épaisseur consolidée de graphite présente de préférence une densité supérieure à 40 kg/m³, et notamment supérieure à 100 kg/m³ s'agissant d'un moule de fonderie. Avantageusement et selon l'invention, l'épaisseur consolidée de graphite intègre des organes de chauffage/refroidissement, tels qu'une partie d'un circuit électrique ou hydraulique. En variante (ou éventuellement en combinaison), l'épaisseur consolidée de graphite comprend au moins une canalisation directement formée dans la masse du graphite, adaptée pour recevoir un fluide de chauffage/refroidissement. En variante ou éventuellement en combinaison, l'épaisseur consolidée de graphite présente au moins une face, dite face extérieure, apparente lors de l'utilisation du moule ; et au moins une face extérieure de ladite épaisseur comporte des formes ouvertes imprimées en creux, dites formes de capture, adaptées pour piéger des ondes infrarouges, lesquelles formes ont de préférence au moins une dimension frontale comprise entre 1 mm et 2 cm et une profondeur comprise entre 1 mm et 10 cm.

L'invention concerne aussi un convertisseur héliothermique, qui comprend au moins une épaisseur consolidée de graphite expansé recomprimé comprenant au moins une canalisation adaptée pour recevoir un fluide caloporteur, et une épaisseur consolidée de vermiculite expansée recomprimée recouvrant l'épaisseur de graphite à l'exception d'au moins une face de cette dernière. Chaque canalisation s'étendant dans l'épaisseur consolidée de graphite est soit directement formée dans la masse de graphite, soit constituée d'un tube, en cuivre par exemple, pris dans l'épaisseur de graphite. L'épaisseur consolidée de graphite présente avantageusement, sur sa face d'absorption, des formes ouvertes imprimées en creux, dites formes de capture, adaptées pour piéger des ondes infrarouges, lesquelles formes ont de préférence au moins une dimension frontale comprise entre 10 µm et 1 cm et une profondeur comprise entre 1 mm et 1 cm.

L'invention concerne également un procédé de fabrication d'un objet composite et un tel objet, caractérisés en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention donnés uniquement à titre d'exemples non limitatifs, et dans lesquelles :
- la figure 1 est une vue schématique en coupe d'une presse utilisée selon l'invention pour fabriquer une cellule électrochimique,
- la figure 2 est une vue en perspective d'une cellule électrochimique selon l'invention,
- la figure 2a est une vue en perspective d'un détail d'une face extérieure de la cellule électrochimique de la figure 2,
- la figure 3 est une vue en perspective d'une autre cellule électrochimique selon l'invention,
- la figure 4 est une vue schématique en perspective, partiellement coupée, d'une presse utilisée selon l'invention pour fabriquer un moule,
- la figure 5 est une vue en perspective d'un moule en deux parties selon l'invention,
- la figure 6 est une vue schématique en coupe d'une presse utilisée selon l'invention pour fabriquer un convertisseur héliothermique,
- la figure 7 est une vue en coupe d'un convertisseur héliothermique selon l'invention,
- la figure 8 est une vue en coupe d'un autre convertisseur héliothermique selon l'invention.

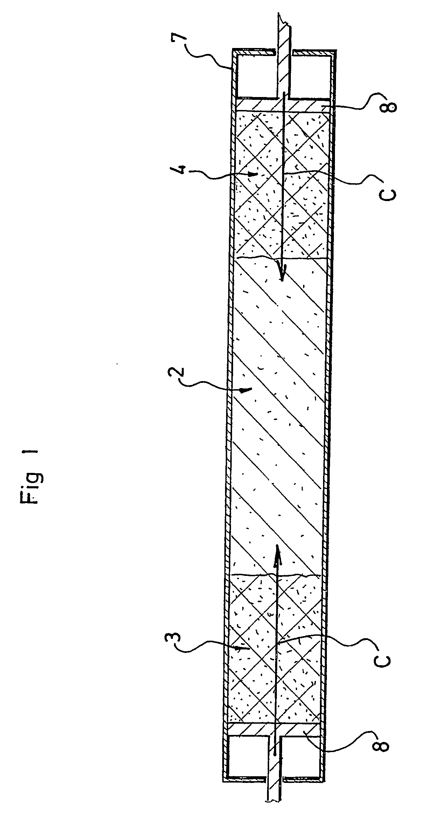

Comme illustré à la figure 1, le procédé de fabrication d'une cellule électrochimique 1 selon l'invention consiste à former successivement, dans une presse uniaxiale 7 par exemple, une épaisseur 3 de graphite expansé, une épaisseur 2 de vermiculite expansée et une épaisseur 4 de graphite expansé. Dans l'exemple non limitatif illustré, les épaisseurs sont superposées dans la direction de compression de la presse, notée C. Le matériau utilisé pour former chaque épaisseur de graphite comprend plus de 70% en poids de graphite naturel expansé ; il comprend, de plus, moins de 20% en poids d'une poudre d'un métal catalytique (platine par exemple) ou d'un oxyde métallique catalytique, répartis de façon homogène dans le graphite naturel expansé. Le matériau utilisé pour former l'épaisseur de vermiculite comprend exclusivement de la vermiculite expansée.

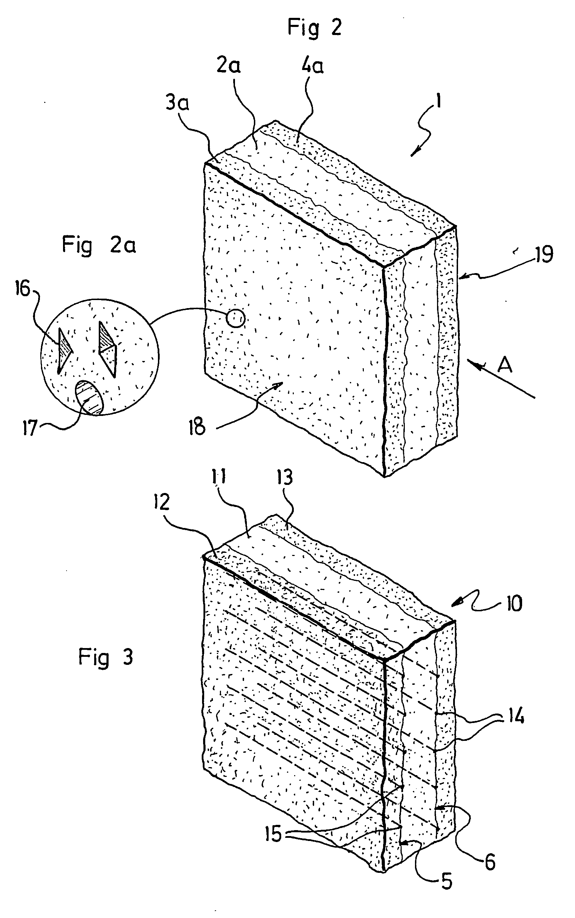

Les trois épaisseurs susmentionnées sont ensuite comprimées ensemble en actionnant au moins l'un des plateaux 8 de la presse, jusqu'à obtenir leur consolidation. De préférence, le taux de compression imposé est faible, c'est-à-dire tout juste supérieur à la fois au taux de compression minimal nécessaire à la consolidation d'une épaisseur de graphite et au taux de compression minimal nécessaire à la consolidation d'une épaisseur de vermiculite. On comprime ainsi les épaisseurs de façon à obtenir deux épaisseurs consolidées de graphite 3a et 4a (voir figure 2) ayant une densité de l'ordre de 35 à 40 kg/m³, en vue d'obtenir des épaisseurs consolidées de graphite et de vermiculite poreuses.

La cellule électrochimique 1 obtenue est illustrée à la figure 2. Elle comprend deux électrodes 3a et 4a correspondant aux deux épaisseurs consolidées de graphite, entre lesquelles s'étend une membrane 2a d'échange d'ions correspondant à l'épaisseur consolidée de vermiculite. La cellule obtenue est parallélépipédique si la presse 7 possède une section carrée ou rectangulaire. Elle présente des dimensions pouvant varier de 10 à 100 mm selon son utilisation: A noter qu'au-delà de 100 mm, la tenue mécanique des épaisseurs faiblement consolidées fait défaut. Il est alors nécessaire de comprimer les épaisseurs de façon à obtenir des densités supérieures à 60 kg/m³. La porosité des électrodes est plus faible et la cellule moins performante. Lorsqu'une cellule de grande dimension est souhaitée, il est donc préférable de juxtaposer une pluralité de petites cellules (faiblement comprimées), agencées en parallèle ou en série.

La face extérieure 18 de l'électrode 3a et la face extérieure 19 de l'électrode 4a présentent des formes de capture 16, 17 (voir figure 2a) de géométrie et de dimensions adaptées au piégeage d'ondes infrarouges. Ces formes de capture sont des poinçons ponctuels cylindriques de section circulaire (tels 17), pyramidaux de base triangulaire (tels 16) ou carrée ou circulaire, etc ... ou des poinçons de forme bien plus complexe. Les formes de capture présentent, en l'exemple, des dimensions frontales comprises entre 1 et 100 µm et une profondeur comprise entre 1 et 100 µm. Les formes de capture sont obtenues au moyen de matrices d'impression portées par les plateaux de la presse 7 (ces matrices ne sont pas représentées compte tenu de l'échelle), et qui présentent une multitude de picots correspondant auxdites formes. L'impression des formes s'effectue au moment de la compression et de la consolidation des épaisseurs 2, 3 et 4. Compte-tenu des propriétés du graphite, il est possible d'obtenir des formes de dimensions microscopiques avec une extrême précision dimensionnelle, et donc de concevoir des pièges à ondes très efficaces et adaptés à la source de rayonnements utilisée. De telles formes microscopiques augmentent de plus considérablement la surface d'échange et donc l'efficacité d'un chauffage ou refroidissement par rayonnement.

La cellule fabriquée est une cellule dite cellule sèche, en référence au milieu échangeur (la membrane de vermiculite) qui est sec et exempt de solution aqueuse. La membrane de vermiculite est imbibée d'une solution électrolytique au moment de l'utilisation de la cellule. En variante, on mélange les réactifs chimiques (notamment couple oxydo-réducteur) cristallisés, de préférence sous forme de sels solides, à la vermiculite expansée (ou au matériau composite utilisé pour former l'épaisseur de vermiculite expansée) avant formation des épaisseurs, de sorte que les réactifs sont présents dans la membrane dès sa fabrication. On imbibe la membrane d'un solvant au moment de l'utilisation de la cellule.

La cellule électrochimique peut être utilisée à titre de réacteur électrolytique, auquel cas chaque électrode 3a, 4a est branchée à une borne d'un générateur de courant électrique, par tous moyens adaptés (un fil conducteur peut être directement scellé dans chaque épaisseur de graphite lors de sa consolidation). La tension appliquée par le générateur entre les deux électrodes impose à chaque électrode un potentiel différent de son potentiel d'équilibre, et entraîne un déplacement de la réaction d'oxydo-réduction de la solution électrolytique, dans le sens de l'oxydation à l'anode (électrode reliée à la borne positive du générateur, et dont le potentiel imposé est supérieur au potentiel d'équilibre), et dans le sens de la réduction à la cathode (électrode reliée à la borne négative du générateur, et dont le potentiel imposé est inférieur au potentiel d'équilibre).

La cellule peut également être utilisée à titre de pile à combustible. Dans ce cas, chaque électrode 3a, 4a est branchée, par tous moyens appropriés, à une borne d'un accumulateur de courant destiné à stocker le courant généré entre les électrodes par la réaction électrochimique.

Les électrodes de graphite 3a et 4a étant poreuses, la réaction d'oxydo-réduction à chacune des électrodes se produit non seulement sur la face intérieure de l'électrode orientée vers la membrane de vermiculite 2, mais aussi et surtout dans la masse même de l'électrode. La surface spécifique de réaction est donc démultipliée et considérablement augmentée par rapport à une électrode connue de même dimensions extérieures. A noter que le métal catalytique est directement mélangé au graphite expansé avant formation des épaisseurs correspondantes, et est donc présent dans toute la masse des électrodes, sur chaque site réactionnel potentiel. Ce procédé offre deux avantages majeurs : le rendement de la cellule est considérablement amélioré (par rapport aux cellules connues) ; le procédé est particulièrement simple et rapide, par opposition aux procédés antérieurs qui prévoient la réalisation d'un revêtement métallique sur une face de l'électrode, par dépôt électrolytique.

Pour un fonctionnement en continu de la cellule (réacteur ou pile), il convient d'alimenter ladite cellule en solution électrolytique. Pour ce faire, on crée une circulation de solution électrolytique à travers ladite cellule. Il est notamment possible de créer une circulation de solution dans chaque électrode poreuse, en particulier selon une direction A compte tenu que les électrodes en graphite expansé recomprimé ont une structure lamellaire formée de plans de carbone superposés orthogonaux à la direction C (et donc parallèles à la direction A).

En variante, on utilise une cellule 10 selon l'invention telle qu'illustrée à la figure 3. Une telle cellule présente des microsillons 15 à l'interface 5 entre l'électrode 12 et la membrane 11, et des microsillons 14 à l'interface 6 entre l'électrode 13 et la membrane 11. Par souci de clarté, seuls quelques microsillons sont représentés (ils peuvent être prévus en grand nombre). Ces microsillons, qui présentent typiquement un diamètre de l'ordre de 10 µm, sont obtenus en interposant des fils entre les épaisseurs de graphite et de vermiculite formées, qui sont ensuite retirés après consolidation desdites épaisseurs. Ces microsillons sont utilisés pour faire circuler les réactifs en continu à travers la cellule électrochimique.

Les cellules 1 et 10 illustrées sont obtenues par compression uniaxiale d'épaisseurs de graphite et de vermiculite, selon une direction C orthogonale aux interfaces entre lesdites épaisseurs. Il est également possible de fabriquer des cellules selon l'invention par compression uniaxiale d'épaisseurs de graphite et de vermiculite selon une direction parallèle aux interfaces entre lesdites épaisseurs, ou encore par compression selon plusieurs directions, et notamment par compression triaxiale selon trois directions orthogonales. Cette dernière version du procédé selon l'invention fournit une cellule dont les électrodes sont faiblement anisotropes et présentent une bonne conductivité électronique dans toutes les directions. Cette caractéristique, particulièrement avantageuse dans le cas d'électrodes poreuses, c'est-à-dire faiblement comprimées, améliore le rendement de la cellule électrochimique puisque tous les sites réactionnels potentiels au sein des électrodes sont convenablement alimentés en électrons.

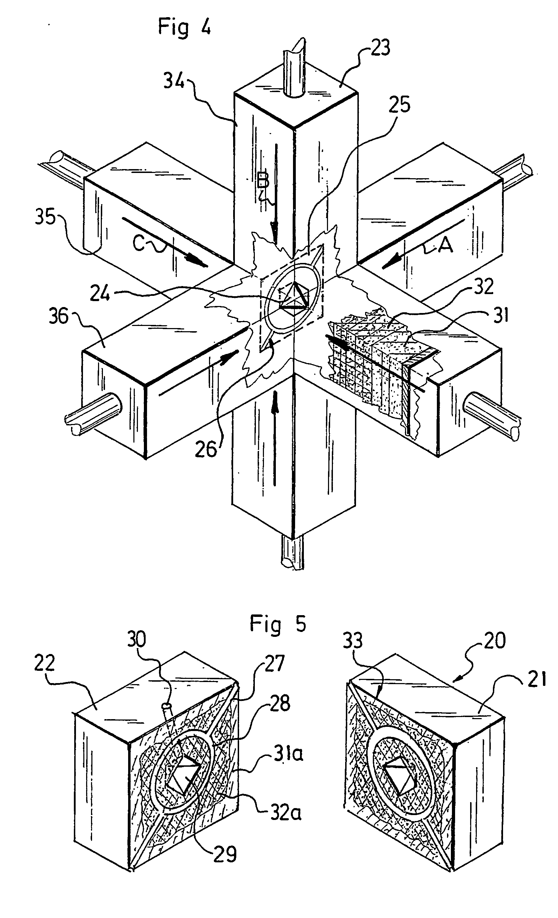

L'invention concerne également un procédé de fabrication d'un moule, illustré aux figures 4 et 5. Selon l'invention, on place au centre d'une presse triaxiale 23, un modèle 24 reproduisant les pièces à fabriquer avec le moule, une feuille de séparation 25 entourant le modèle et le divisant sensiblement en deux moitiés, un réseau 26 de tubes prévus dans la feuille de séparation ou à proximité de celle-ci et destinés à former au sein du moule des canalisations de réception d'un liquide de chauffage/refroidissement, et un tube (non représenté) s'étendant au moins entre le modèle et un plan d'intersection de deux colonnes de la presse en vue de former un puits de coulée au sein du moule.

On remplit chaque colonne 34, 35, 36 de la presse d'une épaisseur de graphite expansé 32 de part et d'autre du modèle, puis d'une épaisseur de vermiculite expansée 31 recouvrant l'épaisseur de graphite expansé 32. Le matériau utilisé pour former l'épaisseur de graphite est, par exemple, exclusivement constitué de graphite naturel expansé ; le matériau utilisé pour former l'épaisseur de vermiculite est, par exemple, exclusivement constitué de vermiculite expansée.

On comprime ensuite les épaisseurs formées en déplaçant les six plateaux de la presse vers le centre de celle-ci, les plateaux de la colonne 35 étant actionnés selon la direction C, ceux de la colonne 34 selon la direction B et ceux de la colonne 36 selon la direction A, jusqu'à ce qu'ils se rejoignent pour former un cube.

Le moule formé est ensuite retiré de la presse, puis ouvert par son plan de joint 33 délimité par la feuille de séparation 25. On obtient ainsi un moule 20 en deux parties 21, 22. La feuille 25, les tubes 26, le tube de coulée et le modèle 24 sont retirés du moule. Chaque partie ou moitié de moule comprend une épaisseur interne consolidée 32a de graphite expansé recomprimé, qui délimite une moitié 29 de l'empreinte de la pièce à mouler, et une épaisseur externe consolidée 31a de vermiculite expansée recomprimée, qui enveloppe l'épaisseur 31a et forme une protection isolante du moule. Les quantités de graphite et de vermiculite expansés, introduites dans la presse pour former les épaisseurs correspondantes, sont choisies en fonction des dimensions de la presse et de la densité finale souhaitée pour les épaisseurs consolidées 31a et 32a.

Chaque moitié de moule 21, 22 comprend également des canalisations hémi-cylindriques 27, 28 formant, avec les canalisations conjuguées de l'autre moitié de moule, un circuit de circulation d'un liquide de chauffage/refroidissement du moule. Au moins l'une des moitiés de moule 21, 22 comprend de plus un puits de coulée 30 s'étendant entre une face du moule et l'empreinte 29, par lequel peut être introduit ou injecté le matériau à mouler, de préférence sous forme liquide.

A noter qu'un circuit indépendant de circulation de liquide de chauffage/refroidissement peut être réalisé dans l'épaisseur 32a de chaque moitié de moule. Un tel procédé est préféré car il garantit une parfaite étanchéité des circuits. A noter également qu'il est possible d'insérer, dans chaque épaisseur de graphite expansé, avant toute compression, des résistances (câbles) destinées à être reliées à un générateur de courant en vue du chauffage du moule.

Il est également possible, pour obtenir un moule selon l'invention, d'utiliser une presse uniaxiale telle que celle illustrée à la figure 1, de former une épaisseur de graphite expansé de part et d'autre d'un modèle, de former ensuite deux épaisseurs de vermiculite expansée de part et d'autre de l'épaisseur de graphite, puis de comprimer les épaisseurs selon une unique direction. On obtient un moule parallélépipédique dont deux faces opposées seulement sont isolées par une épaisseur consolidée de vermiculite.

En variante, on replace les trois épaisseurs ainsi consolidées (munies du modèle) dans la presse uniaxiale de sorte les épaisseurs de vermiculite s'étendent parallèlement à la direction C de compression de la presse, puis on recomprime les épaisseurs. Le moule ainsi obtenu est formé de trois épaisseurs superposées comprimées, de façon successive, selon deux directions orthogonales. On peut réitérer l'opération de façon à comprimer les épaisseurs selon une troisième direction orthogonale aux deux premières. Avant chacune des deuxième et troisième compressions, il est possible de former deux nouvelles épaisseurs de vermiculite expansée de part et d'autre des épaisseurs précédemment consolidées. On obtient alors un moule parallélépipédique dont quatre faces sont isolées par une épaisseur de vermiculite si deux compressions seulement sont effectuées, ou dont les six faces sont isolées si trois compressions sont effectuées.

Dans le cas d'un moule ayant au moins une face dépourvue de protection isolante en vermiculite, la température au sein du moule peut également être contrôlée et ajustée par contact de ladite(desdites) face(s) avec un corps à température régulée ou par exposition (sans contact) de ladite(desdites) face(s) à une source de rayonnements infrarouges (puis par conduction thermique dans l'épaisseur consolidée de graphite). Ainsi, grâce aux propriétés thermiques intéressantes (conductivité, diffusivité, absorptivité, sélectivité) du graphite expansé recomprimé, il n'est pas nécessaire de réaliser ou d'insérer, au sein de l'épaisseur de graphite, un circuit de chauffage/refroidissement, pour pouvoir contrôler la température du moule autour de l'empreinte.

Le moule 20 illustré est composé de deux parties 21, 22 formant chacune une moitié de l'empreinte des pièces à mouler. Toutefois, l'invention permet également de fabriquer des moules d'un seul tenant (de tels moules doivent être détruits pour permettre de démouler la pièce) ou des moules en trois parties et plus.

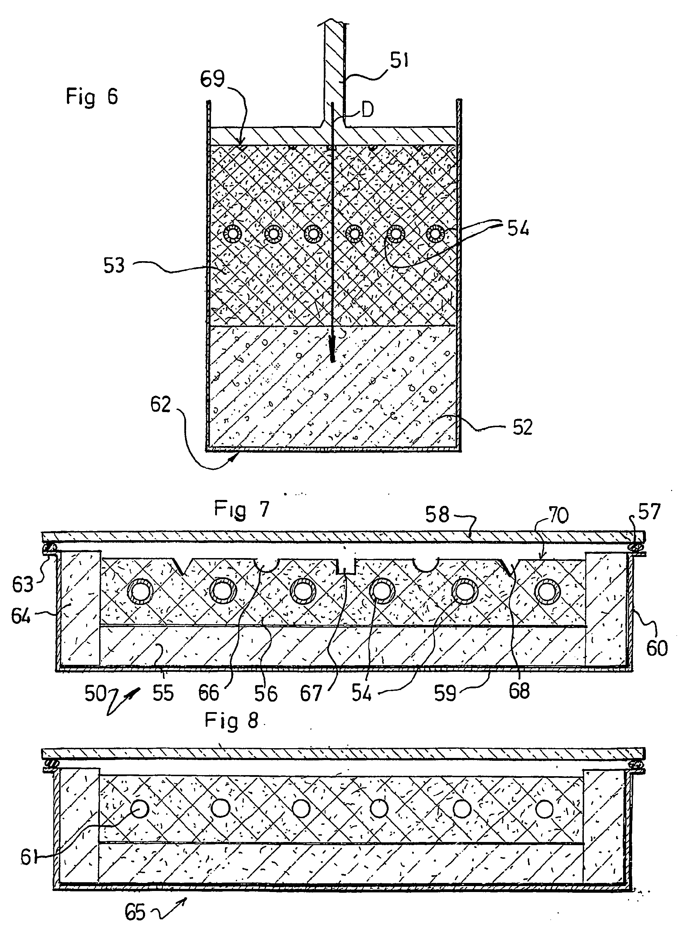

L'invention concerne également un procédé de fabrication d'un convertisseur héliothermique, illustré à la figure 6. Dans une presse uniaxiale 62 à plateau 51, de section carrée ou rectangulaire, on forme une épaisseur de vermiculite expansée 52, puis une épaisseur de graphite expansé 53 dans laquelle on place au moins un tube 54 en forme de serpentin, râteau, spirale ou toute autre forme adaptée. Le tube 54 est agencé parallèlement au plateau 62 et à la face supérieure de l'épaisseur de vermiculite, au cours de la formation de l'épaisseur de graphite. L'emplacement dudit tube dans l'épaisseur et la hauteur totale de l'épaisseur de graphite sont adaptés pour que le tube 54 reste entièrement recouvert de graphite une fois les épaisseurs consolidées. De par sa forme et sa longueur, le tube 54 est uniformément réparti dans l'épaisseur de graphite et ses deux extrémités viennent chacune en butée contre une paroi de la presse 51.

On comprime ensuite les épaisseurs de vermiculite et de graphite expansés, jusqu'à obtenir leur consolidation. La presse utilisée présente un plateau muni d'une matrice d'impression présentant une pluralité de nervures 69, en vue d'imprimer des formes de capture sur la face d'absorption du convertisseur.

Dans cet exemple de réalisation, le graphite recomprimé est utilisé, pour la réalisation d'un échangeur thermique, à titre de matériau de remplissage permettant, de par ses qualités thermiques (absorptivité, diffusivité) et mécaniques (consolidation par simple compression), à la fois d'améliorer le rendement de l'échangeur et d'en simplifier le procédé de fabrication. Le choix du taux de compression résulte d'un compromis entre la consolidation des épaisseurs (le taux doit être supérieur à un taux minimal de consolidation), la recherche d'un gain de masse pour l'échangeur (un faible taux de compression, c'est-à-dire une faible densité de l'épaisseur, permet de prévoir une plus faible quantité de graphite expansé et de limiter la masse finale de l'échangeur), les performances thermiques et énergétiques de l'échangeur (l'absorptivité et la diffusivité de l'épaisseur consolidée de graphite dépendent de sa densité), la présence du tube 54 (qu'il convient de ne pas écraser) ... Un taux de compression correspondant à une densité de l'épaisseur consolidée de graphite comprise entre 30 et 200 kg/m³ (et en tout état de cause inférieure à 400 kg/m³) est préféré.

A noter qu'il est possible de comprimer les épaisseurs selon plusieurs directions, mais que cela complique inutilement le procédé de fabrication au regard du gain (faible) obtenu en terme de rendement du convertisseur.

Les épaisseurs consolidées (voir figure 7) sont retirées de la presse. L'épaisseur de graphite consolidée 56, munie du tube 54, réalise un échangeur thermique en forme de panneau épais ; l'épaisseur de vermiculite consolidée 55 forme un fond isolant recouvrant la face inférieure de l'échangeur. La face d'absorption 70 de l'échangeur présente une pluralité de rainures ou fentes droites telles la rainure 68 de section triangulaire, la rainure 66 de section demi-circulaire, la rainure 67 de section carrée, toutes de largeur et de profondeur inférieures à 1 cm et de préférence comprises entre 1 à 5 mm. Ces rainures ou fentes réalisent des formes de capture, imprimées simultanément à la consolidation des épaisseurs par compression et de façon à venir s'intercaler entre deux branches du tube 54. A noter que l'impression des formes de capture peut éventuellement être effectuée après consolidation des épaisseurs, lors d'une opération ultérieure. Les formes de capture 66, 67, 68 améliorent à la fois l'efficacité d'un chauffage/refroidissement par rayonnement et la tenue mécanique de l'échangeur.

Des plaques isolantes, constituées chacune d'une couche de vermiculite expansée recomprimée, sont rapportées et fixées (par tous moyens appropriés tels que colle ou vis) sur les quatre chants des épaisseurs consolidées 55 et 56, pour former un cadre isolant 64.

Chaque extrémité du tube 54 affleure à la surface d'un chant de l'épaisseur consolidée de graphite 56. Préalablement au montage du cadre isolant, est ménagé, en regard de ladite extrémité de tube, un alésage traversant la plaque du cadre isolant 64 adjacente audit chant. Un tube droit est agencé dans l'alésage et raccordé à l'extrémité du tube 54. Les deux extrémités du tube 54 peuvent ainsi être raccordées, respectivement, à des moyens d'alimentation en fluide caloporteur froid et à des moyens de récupération du fluide caloporteur chauffé par l'énergie solaire.

Le caisson isolant réalisé par le fond 55 et le cadre 64 en vermiculite, est inséré dans un boîtier étanche comprenant un fond 59, des parois latérales 60 et un rebord 63 supérieur s'étendant vers l'extérieur du boîtier. Un tel boîtier protège le caisson en vermiculite -hydrophile- de l'humidité et des intempéries. Le boîtier est fermé, en partie supérieure, par une plaque 58 en verre trempé, fixée sur le rebord supérieur 63 ou les parois latérales 60 du boîtier, par tous moyens adaptés. L'étanchéité entre la plaque de verre et le boîtier est assurée par un joint périphérique 57 en silicone par exemple.

Dans une variante illustrée à la figure 8, la canalisation 61 de circulation du fluide caloporteur est formée directement dans la masse de l'épaisseur consolidée de graphite. Pour ce faire, on place un tube destructible, en cire ou en polystyrène par exemple, dans l'épaisseur de graphite expansé lors de sa formation. Après compression et consolidation de l'épaisseur de graphite, on détruit le tube destructible. Dans cet exemple, le graphite recomprimé constitue la structure rigide de l'échangeur thermique (et non un matériau de remplissage). Le taux de compression imposé est donc choisi suffisamment élevé pour conférer une bonne tenue mécanique à l'ensemble, en fonction des contraintes subies : pression du fluide caloporteur, connectique hydraulique, variations importantes de température.

A noter que les portions de canalisation qui traversent l'épaisseur consolidée de vermiculite (qui est hydrophile) pour raccorder la canalisation 61 aux moyens d'alimentation en fluide caloporteur et de récupération dudit fluide, sont formées par des tubes droits rapportés métalliques, comme dans l'exemple précédent. A noter également que le convertisseur 65 illustré est dépourvu de formes de captures selon l'invention, mais qu'il est avantageux d'en prévoir.

Le procédé de fabrication des convertisseurs 50 et 65 présente de multiples avantages :
- l'absorbeur et l'échangeur thermique sont intégrés dans une seule et même structure (l'épaisseur de graphite), qui est assemblée en une seule opération de consolidation, contrairement aux convertisseurs antérieurs connus qui comprennent, à titre d'absorbeur, une plaque métallique qu'il convient de fabriquer (par extrusion, emboutissage ...), de traiter contre la corrosion et l'oxydation et de recouvrir d'un dépôt d'oxyde de chrome (fortement toxique), puis de souder à l'échangeur. Le convertisseur 65 comprend même un absorbeur-échangeur entièrement réalisé en une seule opération (les tubes sont supprimés),
- l'échangeur thermique et le fond isolant sont formés et assemblés en une seule opération,
- la masse du convertisseur obtenu est bien inférieure à celle des convertisseurs connus,
- le rendement du convertisseur selon l'invention est bien supérieur au rendement des convertisseurs antérieurs, compte tenu que
   - la surface d'échange thermique correspond à toute la circonférence du tube 54 ou de la canalisation 61,
   - le graphite expansé recomprimé présente une bonne sélectivité optique (S=2) dans la gamme des longueurs d'ondes infrarouges qui génèrent l'effet de serre dans le convertisseur. Cette qualité rend inutile tout revêtement au chrome noir,
   - le graphite expansé recomprimé présente une meilleure diffusivité thermique (grandeur mesurant l'aptitude à transmettre la chaleur, et qui est fonction de la conductivité thermique, de la capacité calorifique et de la densité du matériau) que les métaux utilisés dans les techniques antérieures pour réaliser la plaque absorbante. En particulier, un graphite expansé recomprimé ayant une densité de l'ordre de 100 kg/m³ possède une diffusivité 3 fois plus élevée que le cuivre pour une densité 90 fois moindre, 2 fois plus élevée que l'argent pour une densité 100 fois moindre, et 4 fois plus élevée que l'aluminium pour une densité 27 fois moindre,
   - le graphite expansé recomprimé présente une plus faible inertie thermique que les métaux, de sorte que le temps de réponse du convertisseur est amélioré,
   - le graphite expansé recomprimé présente un coefficient de dilatation (linéaire) face à des variations thermiques qui est faible, et notamment 8 fois moins élevé que le cuivre, 11 fois moins élevé que l'aluminium, et 6 fois moins élevé que l'argent,
- le rendement du convertisseur 65 (dépourvu de tube de cuivre) est particulièrement amélioré du fait de l'échange direct de la chaleur entre l'absorbeur (le graphite) et le fluide caloporteur,
- le rendement du convertisseur 50 est amélioré par la présence de formes de capture d'ondes infrarouges,
- le coût de revient des convertisseurs est faible (en particulier celui du convertisseur 65 du fait de la suppression des tubes en cuivre),
- le graphite et la vermiculite sont des matériaux chimiquement inertes, qui ne relarguent pas de gaz après compression et ne sont ni dangereux ni toxiques, y compris sous forme de paillettes (qu'il s'agisse de particules de graphite ou vermiculite expansé(e), ou de débris de graphite ou vermiculite recomprimé(e). Ils sont de plus aisément recyclables.

Dans une version de l'invention (qui peut s'appliquer aux deux exemples de convertisseur précédents), on agence également des résistances électriques dans l'épaisseur de graphite expansé, avant consolidation de cette dernière. Ces résistances servent à soumettre ponctuellement l'échangeur thermique à une température supérieure ou égale à 70° C, en vue de prévenir tout risque de contamination de l'échangeur aux bactéries (telles que les légionnelles). Le procédé selon l'invention permet donc de munir le convertisseur de moyens de traitement anti-bactérien, de façon simple, rapide et économique.

Il va de soi que l'invention peut faire l'objet de nombreuses variantes par rapport aux modes de réalisation précédemment décrits et représentés sur les figures. En particulier, le procédé selon l'invention peut s'appliquer à la réalisation d'autres objets composites.

## Revendications

1. - Procédé de fabrication d'un objet composite comprenant au moins deux parties distinctes ayant des propriétés et/ou fonctions différentes, **caractérisé en ce que** :
- on forme au moins une épaisseur (3 ; 32; 53) comprenant plus de 70% en poids d'un matériau expansé choisi parmi les graphites expansés,
- on forme au moins une autre épaisseur (2; 31; 52) comprenant plus de 70% en poids d'un autre matériau expansé choisi parmi les vermiculites expansées,
- puis on comprime ensemble les épaisseurs formées de façon à les consolider, chaque épaisseur consolidée (3a, 2a ; 32a, 31a ; 56, 55) correspondant à l'une des parties de l'objet.

2. - Procédé selon la revendication 1, **caractérisé en ce que** les épaisseurs (2, 3 ; 31, 32 ; 52, 53) sont formées adjacentes.

3. - Procédé selon l'une des revendications 1 ou 2, **caractérisé en ce qu'**on comprime ensemble les épaisseurs formées (31, 32) selon plusieurs directions.

4. - Procédé selon la revendication 3, **caractérisé en ce qu'**on comprime ensemble les épaisseurs formées (31, 32) selon trois directions orthogonales.

5. - Procédé selon l'une des revendications 1 ou 2, **caractérisé en ce que** les épaisseurs formées (52, 53) sont comprimées selon une unique direction.

6. - Procédé selon la revendication 5, **caractérisé en ce que** la direction de compression (c) est sensiblement orthogonale à un plan d'interface entre lesdites épaisseurs.

7. - Procédé selon l'une des revendications 1 à 6, **caractérisé en ce qu'**on soumet les épaisseurs formées (31, 32) à une unique opération de compression selon chaque direction (A, B, C).

8. - Procédé selon l'une des revendications 1 à 7, **caractérisé en ce qu'**on soumet les épaisseurs formées (31, 32) à une unique opération de compression.

9. - Procédé selon l'une des revendications 1 à 6, **caractérisé en ce qu'**on soumet les épaisseurs formées à une pluralité d'opérations distinctes de compression selon au moins une direction.

10. - Procédé selon la revendication 9, **caractérisé en ce qu'**on effectue, selon cette direction, une première compression adaptée pour consolider les épaisseurs formées en vue de permettre leur manipulation, et, ultérieurement, une deuxième compression adaptée pour conférer une densité souhaitée à l'une desdites épaisseurs.

11. - Procédé selon l'une des revendications 1 à 10, **caractérisée en ce que**, lors de la compression des épaisseurs formées, on imprime sur au moins une face, dite face extérieure, d'au moins une épaisseur de graphite, des formes en creux ouvertes, dites formes de capture, adaptées pour piéger des ondes infrarouges.

12. - Procédé selon l'une des revendications 1 à 10, **caractérisé en ce qu'**on utilise, à titre de graphite expansé, un graphite naturel expansé.

13. - Procédé selon l'une des revendications 1 à 12, **caractérisé en ce que** l'épaisseur de vermiculite formée comprend moins de 30 % en poids d'additifs choisis parmi la perlite, les matériaux expansés obtenus à partir d'oxydes tels que SiO₂ ou Al₂O₃, les kandites, les illites, les smectites, les kaolinites.

14. - Procédé selon l'une des revendications 1 à 13 pour la fabrication d'une cellule électrochimique (1), **caractérisé en ce qu'**on forme une épaisseur (2) de vermiculite expansée entre deux épaisseurs (3, 4) de graphite expansé, puis on comprime ensemble les épaisseurs formées.

15. - Procédé selon la revendication 14, **caractérisé en ce qu'**on comprime ensemble les épaisseurs formées selon trois directions orthogonales.

16. - Procédé selon l'une des revendications 14 ou 15, **caractérisé en ce qu'**on comprime les épaisseurs formées de telle sorte que les deux épaisseurs consolidées (3a, 4a) de graphite présentent une densité comprise entre 30 et 60 kg/m³.

17. - Procédé selon l'une des revendications 14 à 16, **caractérisé en ce que**, pour au moins l'une (12, 13) des épaisseurs de graphite, on forme des microsillons (15, 14) sur une face de ladite épaisseur, dite face intérieure, orientée vers l'épaisseur de vermiculite, en plaçant des fils destructibles ou amovibles entre l'épaisseur de graphite expansé et l'épaisseur de vermiculite expansée lors de leur formation, lesdits fils étant détruits ou retirés une fois les épaisseurs consolidées.

18. - Procédé selon l'une des revendications 14 à 17, **caractérisé en ce qu'**on incorpore des organes de chauffage/refroidissement dans au moins l'une des épaisseurs de graphite expansé lors de sa formation.

19. - Procédé selon l'une des revendications 14 à 18 et selon la revendication 11, **caractérisé en ce qu'**on imprime, sur au moins une face extérieure (18) d'au moins une épaisseur de graphite (3a), des formes de capture (16, 17) présentant au moins une dimension frontale comprise entre 1 µm et 5 mm et une profondeur comprise entre 1 µm et 1 mm.

20. - Procédé selon l'une des revendications 14 à 19, **caractérisé en ce que** chaque épaisseur de graphite formée comprend moins de 20 % en poids d'une poudre d'un matériau catalytique, tel qu'un métal ou un oxyde métallique catalytique.

21. - Procédé selon l'une des revendications 14 à 20, **caractérisé en ce que** l'épaisseur de vermiculite formée comprend des enzymes lyophilisées.

22. - Procédé selon l'une des revendications 1 à 13 pour la fabrication d'un moule (20), **caractérisé en ce qu'**on recouvre un modèle (24) d'une épaisseur (32) de graphite expansé, puis on forme une épaisseur (31) de vermiculite expansée recouvrant au moins partiellement l'épaisseur de graphite, puis on comprime ensemble les épaisseurs formées.

23. - Procédé selon la revendication 22 pour la fabrication d'un moule de fonderie, **caractérisé en ce qu'**on comprime ensemble les épaisseurs formées de telle sorte que l'épaisseur consolidée (32a) de graphite présente une densité supérieure à 100 kg/m³.

24. - Procédé selon l'une des revendications 22 ou 23, **caractérisé en ce qu'**on place des organes de chauffage/refroidissement dans l'épaisseur de graphite expansé lors de sa formation.

25. - Procédé selon l'une des revendications 22 ou 23, **caractérisé en ce que** l'on forme, directement dans la masse de graphite, au moins une canalisation (27, 28) adaptée pour recevoir un fluide de chauffage/refroidissement, en plaçant au moins un tube (26) destructible ou amovible dans l'épaisseur (32) de graphite expansé lors de sa formation, le(s)dit(s) tube(s) étant détruit(s) ou retiré(s) une fois ladite épaisseur consolidée.

26. - Procédé selon l'une des revendications 22 à 25 et selon la revendication 11, **caractérisé en ce que** l'épaisseur de vermiculite est formée de façon à laisser au moins une face de l'épaisseur consolidée de graphite, dite face extérieure, apparente lors de l'utilisation du moule, et **en ce qu'**on imprime, sur au moins une face extérieure de l'épaisseur de graphite, des formes de capture présentant au moins une dimension frontale comprise entre 1 mm et 2 cm et une profondeur comprise entre 1 mm et 10 cm.

27. - Procédé selon l'une des revendications 1 à 13 pour la fabrication d'un convertisseur héliothermique (50), **caractérisé en ce qu'**on forme une épaisseur (53) de graphite expansé dans laquelle on aménage au moins une canalisation (54, 61) adaptée pour recevoir un fluide caloporteur, on forme une épaisseur (52) de vermiculite recouvrant partiellement l'épaisseur de graphite et laissant découverte au moins une face de cette dernière, dite face d'absorption, puis on comprime ensemble les épaisseurs formées.

28. - Procédé selon la revendication 27, **caractérisé en ce qu'**on place au moins un tube (54) permanent dans l'épaisseur de graphite expansé.

29. - Procédé selon la revendication 27, **caractérisé en ce qu'**on place au moins un tube destructible ou amovible dans l'épaisseur de graphite expansé, le(s)dit(s) tube(s) étant détruit(s) ou retiré(s) une fois l'épaisseur de graphite consolidée.

30. - Procédé selon l'une des revendications 27 à 29 et selon la revendication 11, **caractérisé en ce qu'**on imprime, sur la face d'absorption (70) de l'épaisseur consolidée de graphite, des formes de capture (66, 67, 68) présentant des dimensions frontales comprises entre 10 µm et 1 cm et une profondeur comprise entre 1 mm et 1 cm.

31. - Objet composite comprenant au moins deux parties distinctes ayant des propriétés et/ou fonctions différentes, **caractérisé en ce que** l'une des parties comporte une épaisseur consolidée comprenant plus de 70% en poids d'un matériau expansé recomprimé choisi parmi les graphites expansés, et **en ce qu'**une autre des parties comporte une autre épaisseur consolidée comprenant plus de 70% en poids d'un autre matériau expansé recomprimé choisi parmi les vermiculites expansées.

32. - Objet selon la revendication 31, **caractérisé en ce qu'**il s'agit d'une cellule électrochimique (1) et **en ce qu'**il comprend au moins une épaisseur consolidée (2a) de vermiculite expansée recomprimée, intercalée entre deux épaisseurs consolidées (3a, 4a) de graphite expansé recomprimé.

33. - Objet selon la revendication 32, **caractérisé en ce que** les épaisseurs consolidées de graphite présentent une densité comprise entre 30 et 60 kg/m³.

34. - Objet selon l'une des revendications 32 ou 33, **caractérisé en ce qu'**au moins l'une (13, 12) des épaisseurs consolidées de graphite présente des microsillons (14, 15) sur une face, dite face intérieure, orientée vers l'épaisseur de vermiculite.

35. - Objet selon l'une des revendications 32 à 34, **caractérisé en ce qu'**au moins l'une des épaisseurs consolidées de graphite intègre des organes de chauffage/refroidissement.

36. - Objet selon l'une des revendications 32 à 35, **caractérisé en ce qu'**au moins une des épaisseurs consolidées de graphite présente, sur au moins une face extérieure, des formes (16, 17) ouvertes imprimées en creux, dites formes de capture, adaptées pour piéger des ondes infrarouges.

37. - Objet selon la revendication 36, **caractérisé en ce que** les formes de capture présentent au moins une dimension frontale comprise entre 1 µm et 5 mm et une profondeur comprise entre 1 µm et 1 mm.

38. - Objet selon l'une des revendications 32 à 37, **caractérisé en ce que** l'épaisseur consolidée de vermiculite comprend des enzymes lyophilisées.

39. - Objet selon la revendication 31, **caractérisé en ce qu'**il s'agit d'un moule (20) et **en ce qu'**il comprend au moins une épaisseur consolidée (32a) de graphite expansé recomprimé, qui délimite une empreinte (29) correspondant à un objet à reproduire par moulage, et une épaisseur consolidée (31a) de vermiculite expansée recomprimée recouvrant au moins partiellement ladite épaisseur de graphite.

40. - Objet selon la revendication 39, **caractérisé en ce qu'**il s'agit d'un moule de fonderie et **en ce que** l'épaisseur consolidée de graphite présente une densité supérieure à 100 kg/m³.

41. - Objet selon l'une des revendications 39 ou 40, **caractérisé en ce que** l'épaisseur consolidée de graphite intègre des organes de chauffage/refroidissement.

42. - Objet selon l'une des revendications 39 ou 40, **caractérisé en ce que** l'épaisseur consolidée (32a) de graphite comprend au moins une canalisation (27, 28) directement formée dans la masse de graphite, adaptée pour recevoir un fluide de chauffage/refroidissement.

43. - Objet selon l'une des revendications 39 à 42, **caractérisé en ce que** l'épaisseur consolidée de graphite présente au moins une face, dite face extérieure, apparente lors de l'utilisation du moule, et **en ce qu'**au moins une face extérieure de l'épaisseur consolidée de graphite présente des formes ouvertes imprimées en creux, dites formes de capture, adaptées pour piéger des ondes infrarouges.

44. - Objet selon la revendication 43, **caractérisé en ce que** les formes de capture présentent au moins une dimension frontale comprise entre 1 mm et 2 cm et une profondeur comprise entre 1 mm et 10 cm.

45. - Objet selon la revendication 31, **caractérisé en ce qu'**il s'agit d'un convertisseur héliothermique (50) et **en ce qu'**il comprend au moins une épaisseur consolidée (56) de graphite expansé recomprimé comprenant au moins une canalisation (54) adaptée pour recevoir un fluide caloporteur, et une épaisseur consolidée (55) de vermiculite expansée recomprimée recouvrant l'épaisseur de graphite à l'exception d'au moins une face de cette dernière, dite face d'absorption.

46. - Objet selon la revendication 45, **caractérisé en ce que** la(les) canalisation(s) (61) sont directement formée(s) dans la masse de graphite.

47. - Objet selon la revendication 45, **caractérisé en ce que** la(les) canalisation(s) sont constituée(s) de tube(s) (54) pris dans l'épaisseur de graphite.

48. - Objet selon l'une des revendications 45 à 47, **caractérisé en ce que** l'épaisseur consolidée de graphite présente, sur sa face d'absorption (70), des formes (66, 67, 68) ouvertes imprimées en creux, dites formes de capture, adaptées pour piéger des ondes infrarouges.

49. - Objet selon la revendication 48, **caractérisé en ce que** les formes de capture présentent au moins une dimension frontale comprise entre 10 µm et 1 cm et une profondeur comprise entre 1 mm et 1 cm.

## Claims

1. Method for producing a composite object comprising at least two distinct parts having different properties and/or functions, which comprises:
- forming at least one layer (3; 32; 53) comprising more than 70 wt.% of an expanded material selected from expanded graphites,
- forming at least one other layer (2; 31; 52) comprising more than 70 wt.% of another expanded material selected from expanded vermiculites,
- and then compressing the layers so formed together so as to consolidate them, each consolidated layer (3a, 2a; 32a, 31a; 56, 55) corresponding to one of the parts of the object.

2. Method according to claim 1, **characterized in that** the layers (2, 3; 31, 32; 52, 53) are formed to be adjacent.

3. Method according to either claim 1 or claim 2, **characterized in that** the layers formed (31, 32) are compressed together according to several directions.

4. Method according to claim 3, **characterized in that** the layers formed (31, 32) are compressed together according to three orthogonal directions.

5. Method according to either claim 1 or claim 2, **characterized in that** the layers formed (52, 53) are compressed according to a single direction.

6. Method according to claim 5, **characterized in that** the direction of compression (c) is substantially orthogonal with respect to an interfacial plane between said layers.

7. Method according to any one of claims 1 to 6, **characterized in that** the layers formed (31, 32) are subjected to a single compression operation according to each direction (A, B, C).

8. Method according to any one of claims 1 to 7, **characterized in that** the layers formed (31, 32) are subjected to a single compression operation.

9. Method according to any one of claims 1 to 6, **characterized in that** the layers formed are subjected to a plurality of distinct compression operations according to at least one direction.

10. Method according to claim 9, **characterized in that** there are carried out, according to that direction, a first compression operation suitable for consolidating the layers formed in order to allow them to be handled and, subsequently, a second compression operation suitable for conferring a desired density on one of said layers.

11. Method according to any one of claims 1 to 10, **characterized in that**, during compression of the layers formed, there are impressed into at least one face, called an outer face, of at least one layer of graphite open recessed forms, called capture forms, which are suitable for trapping infra-red waves.

12. Method according to any one of claims 1 to 10, **characterized in that** there is used as expanded graphite an expanded natural graphite.

13. Method according to any one of claims 1 to 12, **characterized in that** the layer of vermiculite formed comprises less than 30 wt.% additives selected from perlite, expanded materials obtained from oxides such as SiO₂ or Al₂O₃, kandites, illites, smectites, kaolinites.

14. Method according to any one of claims 1 to 13 for producing an electrochemical cell (1), **characterized in that** a layer (2) of expanded vermiculite is formed between two layers (3, 4) of expanded graphite, and then the layers so formed are compressed together.

15. Method according to claim 14, **characterized in that** the layers formed are compressed together according to three orthogonal directions.

16. Method according to either claim 14 or claim 15, **characterized in that** the layers formed are compressed in such a manner that the two consolidated layers (3a, 4a) of graphite have a density of from 30 to 60 kg/m³.

17. Method according to any one of claims 14 to 16, **characterized in that**, for at least one (12, 13) of the layers of graphite, microgrooves (15, 14) are formed on one face of said layer, called an inner face, that is oriented towards the layer of vermiculite, by placing destructible or removable threads between the layer of expanded graphite and the layer of expanded vermiculite during their formation, said threads being destroyed or removed once the layers have been consolidated.

18. Method according to any one of claims 14 to 17, **characterized in that** heating/cooling members are incorporated into at least one of the layers of expanded graphite during its formation.

19. Method according to any one of claims 14 to 18 and according to claim 11, **characterized in that** there are impressed into at least one outer face (18) of at least one layer of graphite (3a) capture forms (16, 17) having at least one front dimension of from 1 µm to 5 mm and a depth of from 1 µm to 1 mm.

20. Method according to any one of claims 14 to 19, **characterized in that** each layer of graphite formed comprises less than 20 wt.% of a powder of a catalytic material, such as a catalytic metal or metal oxide.

21. Method according to any one of claims 14 to 20, **characterized in that** the layer of vermiculite formed comprises lyophilized enzymes.

22. Method according to any one of claims 1 to 13 for producing a mold (20), **characterized in that** a model (24) is covered with a layer (32) of expanded graphite, then a layer (31) of expanded vermiculite that covers at least part of the layer of graphite is formed, and then the layers so formed are compressed together.

23. Method according to claim 22 for producing a casting mold, **characterized in that** the layers formed are compressed together in such a manner that the consolidated layer (32a) of graphite has a density greater than 100 kg/m³.

24. Method according to either claim 22 or claim 23, **characterized in that** heating/cooling members are placed in the layer of expanded graphite during its formation.

25. Method according to either claim 22 or claim 23, **characterized in that** at least one channel (27, 28) suitable for receiving a heating/cooling fluid is formed directly in the mass of graphite by placing at least one destructible or removable tube (26) in the layer (32) of expanded graphite during its formation, said tube(s) being destroyed or removed once said layer has been consolidated.

26. Method according to any one of claims 22 to 25 and according to claim 11, **characterized in that** the layer of vermiculite is formed in such a manner as to leave at least one face of the consolidated layer of graphite, called an outer face, visible when the mold is in use, and **in that** there are impressed into at least one outer face of the layer of graphite capture forms having at least one front dimension of from 1 mm to 2 cm and a depth of from 1 mm to 10 cm.

27. Method according to any one of claims 1 to 13 for producing a heliothermal converter (50), **characterized in that** a layer (53) of expanded graphite is formed, in which there is provided at least one channel (54, 61) suitable for receiving a liquid coolant, a layer (52) of vermiculite is formed, which layer covers at least part of the layer of graphite and leaves uncovered at least one face thereof, called an absorption face, and then the layers so formed are compressed together.

28. Method according to claim 27, **characterized in that** at least one permanent tube (54) is placed in the layer of expanded graphite.

29. Method according to claim 27, **characterized in that** at least one destructible or removable tube is placed in the layer of expanded graphite, said tube(s) being destroyed or removed once the layer of graphite has been consolidated.

30. Method according to any one of claims 27 to 29 and according to claim 11, **characterized in that** there are impressed into the absorption face (70) of the consolidated layer of graphite capture forms (66, 67, 68) having front dimensions of from 10 µm to 1 cm and a depth of from 1 mm to 1 cm.

31. Composite object comprising at least two distinct parts having different properties and/or functions, **characterized in that** one of the parts comprises a consolidated layer comprising more than 70 wt.% of a recompressed expanded material selected from expanded graphites, and **in that** another of the parts comprises another consolidated layer comprising more than 70 wt.% of another recompressed expanded material selected from expanded vermiculites.

32. Object according to claim 31, which is an electrochemical cell (1) and comprises at least one consolidated layer (2a) of recompressed expanded vermiculite inserted between two consolidated layers (3a, 4a) of recompressed expanded graphite.

33. Object according to claim 32, **characterized in that** the consolidated layers of graphite have a density of from 30 to 60 kg/m³.

34. Object according to either claim 32 or claim 33, **characterized in that** at least one (13, 12) of the consolidated layers of graphite has microgrooves (14, 15) on one face, called an inner face, that is oriented towards the layer of vermiculite.

35. Object according to any one of claims 32 to 34, **characterized in that** at least one of the consolidated layers of graphite incorporates heating/cooling members.

36. Object according to any one of claims 32 to 35, **characterized in that** at least one of the consolidated layers of graphite has, on at least one outer face, impressed open recessed forms (16, 17), called capture forms, which are suitable for trapping infra-red waves.

37. Object according to claim 36, **characterized in that** the capture forms have at least one front dimension of from 1 µm to 5 mm and a depth of from 1 µm to 1 mm.

38. Object according to any one of claims 32 to 37, **characterized in that** the consolidated layer of vermiculite comprises lyophilized enzymes.

39. Object according to claim 31, which is a mold (20) and comprises at least one consolidated layer (32a) of recompressed expanded graphite delimiting a cavity (29) corresponding to an object to be reproduced by molding, and a consolidated layer (31a) of recompressed expanded vermiculite covering at least part of said layer of graphite.

40. Object according to claim 39, which is a casting mold and **characterized in that** the consolidated layer of graphite has a density greater than 100 kg/m³.

41. Object according to either claim 39 or claim 40, **characterized in that** the consolidated layer of graphite incorporates heating/cooling members.

42. Object according to either claim 39 or claim 40, **characterized in that** the consolidated layer (32a) of graphite comprises at least one channel (27, 28) which has been formed directly in the mass of graphite and is suitable for receiving a heating/cooling fluid.

43. Object according to any one of claims 39 to 42, **characterized in that** the consolidated layer of graphite has at least one face, called an outer face, that is visible when the mold is in use, and **in that** at least one outer face of the consolidated layer of graphite comprises impressed open recessed forms, called capture forms, which are suitable for trapping infra-red waves.

44. Object according to claim 43, **characterized in that** the capture forms have at least one front dimension of from 1 mm to 2 cm and a depth of from 1 mm to 10 cm.

45. Object according to claim 31, which is a heliothermal converter (50) and comprises at least one consolidated layer (56) of recompressed expanded graphite comprising at least one channel (54) suitable for receiving a liquid coolant, and a consolidated layer (55) of recompressed expanded vermiculite covering the layer of graphite with the exception of at least one face thereof, called an absorption face.

46. Object according to claim 45, **characterized in that** the channel(s) (61) has/have been formed directly in the mass of graphite.

47. Object according to claim 45, **characterized in that** the channel(s) is/are constituted by tube(s) (54) accommodated in the layer of graphite.

48. Object according to any one of claims 45 to 47, **characterized in that** the consolidated layer of graphite has, on its absorption face (70), impressed open recessed forms (66, 67, 68), called capture forms, which are suitable for trapping infra-red waves.

49. Object according to claim 48, **characterized in that** the capture forms have at least one front dimension of from 10 µm to 1 cm and a depth of from 1 mm to 1 cm.

## Patentansprüche

1. - Verfahren zur Herstellung eines Verbundgegenstands, der mindestens zwei getrennte Teile umfaßt, die unterschiedliche Eigenschaften und/oder Funktionen haben, **dadurch gekennzeichnet, daß**:
- Es mindestens eine Dicke (3, 32, 53) gebildet wird, die über 70 Gewichtsprozent eines Blähmaterials aufweist, das unter den Blähgraphiten gewählt wird,
- Es mindestens eine weitere Dicke (2, 31, 52) gebildet wird, die über 70 Gewichtsprozent eines anderen Blähmaterials aufweist, das unter den Blähvermiculiten gewählt wird,
- Dann werden die gebildeten Dicken so zusammen verdichtet, daß sie konsolidiert werden, wobei jede konsolidierte Dicke (3a, 2a, 32a, 31a, 56, 55) einem der Teile des Gegenstands entspricht.

2. - Verfahren nach Anspruch 1, **dadurch gekennzeichnet, daß** die Dicken (2, 3; 31, 32; 52, 53) angrenzend gebildet werden.

3. - Verfahren nach einem der vorstehenden Ansprüche 1 oder 2, **dadurch gekennzeichnet, daß** die gebildeten Dicken (31, 32) in mehreren Richtungen zusammen verdichtet werden.

4. - Verfahren nach Anspruch 3, **dadurch gekennzeichnet, daß** die gebildeten Dicken (31, 32) in drei rechtwinkligen Richtungen zusammen verdichtet werden.

5. - Verfahren nach einem der vorstehenden Ansprüche 1 oder 2, **dadurch gekennzeichnet, daß** die gebildeten Dicken (52, 53) in einer einzigen Richtung verdichtet werden.

6. - Verfahren nach Anspruch 5, **dadurch gekennzeichnet, daß** die Verdichtungsrichtung (c) etwa rechtwinklig zu einer Schnittstellenebene zwischen den besagten Dicken ist.

7. - Verfahren nach einem der vorstehenden Ansprüche 1 bis 6, **dadurch gekennzeichnet, daß** die gebildeten Dicken (31, 32) einem einzigen Verdichtungsvorgang in jeder Richtung (A, B, C) unterzogen werden.

8. - Verfahren nach einem der vorstehenden Ansprüche 1 bis 7, **dadurch gekennzeichnet, daß** die gebildeten Dicken (31, 32) einem einzigen Verdichtungsvorgang unterzogen werden.

9. - Verfahren nach einem der vorstehenden Ansprüche 1 bis 6, **dadurch gekennzeichnet, daß** die gebildeten Dicken mehreren getrennten Verdichtungsvorgängen in mindestens einer Richtung unterzogen werden.

10. - Verfahren nach Anspruch 9, **dadurch gekennzeichnet, daß** in dieser Richtung eine erste Verdichtung durchgeführt wird, die geeignet ist, die gebildeten Dicken zu konsolidieren, damit mit ihnen umgegangen werden kann, und später eine zweite Verdichtung, die geeignet ist, einer der besagten Dicken eine gewünschte Dichte zu verleihen.

11. - Verfahren nach einem der vorstehenden Ansprüche 1 bis 10, **dadurch gekennzeichnet, daß** bei der Verdichtung der gebildeten Dicken auf mindestens einer Fläche, der sogenannten Außenfläche, mit mindestens einer Dicke Graphit, Formen mit offenen Hohlräumen gedruckt werden, die sogenannten Fangformen, die geeignet sind, die Infrarotwellen zu fangen.

12. - Verfahren nach einem der vorstehenden Ansprüche 1 bis 10, **dadurch gekennzeichnet, daß** als Blähgraphit ein natürlicher Blähgraphit verwendet wird.

13. - Verfahren nach einem der vorstehenden Ansprüche 1 bis 12, **dadurch gekennzeichnet, daß** die gebildete Dicke aus Vermiculit weniger als 30 Gewichtsprozent an Zusatzstoffen enthält, die unter Perlit, aus Oxiden wie SiO₂ oder Al₂O₃ erzielten Blähmaterialen, Kanditen, Illiten, Smektiten, Kaoliniten gewählt werden.

14. - Verfahren nach einem der vorstehenden Ansprüche 1 bis 13 für die Herstellung einer elektrochemischen Zelle (1), **dadurch gekennzeichnet, daß** eine Dicke (2) aus Blähvermiculit zwischen zwei Dicken (3, 4) Blähgraphit gebildet wird, dann werden die gebildeten Dicken zusammen verdichtet.

15. - Verfahren nach Anspruch 14, **dadurch gekennzeichnet, daß** die gebildeten Dicken in drei rechtwinkligen Richtungen zusammen verdichtet werden.

16. - Verfahren nach einem der vorstehenden Ansprüche 14 oder 15, **dadurch gekennzeichnet, daß** die gebildeten Dicken so verdichtet werden, daß die beiden konsolidierten Dicken (3a, 4a) aus Graphit eine Dichte von zwischen 30 und 60 kg/m³ aufweisen.

17. - Verfahren nach einem der vorstehenden Ansprüche 14 bis 16, **dadurch gekennzeichnet, daß** für mindestens eine (12, 13) der Graphitdicken Mikrorillen (15, 14) auf einer Fläche der besagten Dicke, der sogenannten Innenfläche, gebildet werden, die zur Vermiculitdicke hin ausgerichtet ist, indem bei ihrer Bildung zerstörbare oder abnehmbare Drähte zwischen der Blähgraphitdicke und der Blähvermiculitdicke plaziert werden, wobei die besagten Drähte zerstört oder entfernt werden, wenn die Dicken konsolidiert sind.

18. - Verfahren nach einem der vorstehenden Ansprüche 14 bis 17, **dadurch gekennzeichnet, daß** in mindestens eine der Blähgraphtdicken bei ihrer Bildung Heiz-/Kühlorgane eingelassen werden.

19. - Verfahren nach einem der vorstehenden Ansprüche 14 bis 18 und nach Anspruch 11, **dadurch gekennzeichnet, daß** auf mindestens einer Außenfläche (18) von mindestens einer Graphitdicke (3a) Fangformen (16, 17) gedruckt werden, die mindestens eine frontale Abmessung von zwischen 1 µm und 5 mm und eine Tiefe von zwischen 1µm und 1 mm aufweisen.

20. - Verfahren nach einem der vorstehenden Ansprüche 14 bis 19, **dadurch gekennzeichnet, daß** jede gebildete Graphitdicke weniger als 20 Gewichtsprozent eines Pulvers aus einem katalytischen Material umfaßt, wie ein Metall oder ein katalytisches Metalloxid.

21. - Verfahren nach einem der vorstehenden Ansprüche 14 bis 20, **dadurch gekennzeichnet, daß** die gebildete Vermiculitdicke gefriergetrocknete Enzyme umfaßt.

22. - Verfahren nach einem der vorstehenden Ansprüche 1 bis 13 für die Herstellung einer Gießform (20), **dadurch gekennzeichnet, daß** ein Modell (24) mit einer Blähgraphitdicke (32) überdeckt wird, anschließend eine Blähvermiculitdicke (31) gebildet wird, die die Graphitdicke mindestens teilweise überdeckt, dann werden die gebildeten Dicken zusammen verdichtet.

23. - Verfahren nach Anspruch 22 zur Herstellung einer Gießform, **dadurch gekennzeichnet, daß** die gebildeten Dicken so zusammen verdichtet werden, daß die konsolidierte Graphitdicke (32a) eine Dichte von über 100 kg/m³ aufweist.

24. - Verfahren nach einem der vorstehenden Ansprüche 22 oder 23, **dadurch gekennzeichnet, daß** die Heiz-/Kühlorgane in die Blähgraphitdicke bei ihrer Bildung gestellt werden.

25. - Verfahren nach einem der vorstehenden Ansprüche 22 oder 23, **dadurch gekennzeichnet, daß** direkt in der Graphitmasse mindestens ein Röhrensystem (27, 28) gebildet wird, das geeignet ist, ein Heiz/Kühlmedium aufzunehmen, indem mindestens ein zerstörbares oder entfernbares Rohr (26) in die Blähgraphitdicke (32) bei ihrer Bildung gestellt wird, wobei das/die besagte(n) Rohr(e) zerstört oder entfernt wird/werden, wenn die besagte Dicke konsolidiert ist.

26. - Verfahren nach einem der vorstehenden Ansprüche 22 bis 25 und nach Anspruch 11, **dadurch gekennzeichnet, daß** die Vermiculitdicke so gebildet wird, daß mindestens eine Fläche der konsolidierten Graphitdicke, die sogenannte Außenfläche, bei der Benutzung der Gießform sichtbar bleibt, und daß auf mindestens einer Außenfläche der Graphitdicke Fangformen gedruckt werden, die mindestens eine frontale Abmessung von zwischen 1 mm und 2 cm aufweisen und eine Tiefe von zwischen 1 mm und 10 cm.

27. - Verfahren nach einem der vorstehenden Ansprüche 1 bis 13 für die Herstellung eines heliothermischen Wandlers (50), **dadurch gekennzeichnet, daß** eine Dicke (53) Blähgraphit geformt wird, in der mindestens ein Röhrensystem (54, 61) gestaltet wird, das geeignet ist, ein wärmeführendes Medium aufzunehmen, es eine Vermiculitdicke (52) geformt wird, die die Graphitdicke teilweise überdeckt und mindestens eine ihrer Flächen, die sogenannte Absorptionsfläche, frei läßt, und anschließend die gebildeten Dicken zusammen verdichtet werden.

28. - Verfahren nach Anspruch 27, **dadurch gekennzeichnet, daß** mindestens ein bleibendes Rohr (54) in die Blähgraphitdicke plaziert wird.

29. - Verfahren nach Anspruch 27, **dadurch gekennzeichnet, daß** mindestens ein zerstörbares oder entfernbares Rohr in die Blähgraphitdicke plaziert wird, wobei das/die besagte(n) Rohr(e) zerstört oder entfernt wird/werden, wenn die Graphitdicke konsolidiert wurde.

30. - Verfahren nach einem der vorstehenden Ansprüche 27 bis 29 und nach Anspruch 11, **dadurch gekennzeichnet, daß** auf der Absorptionsfläche (70) der konsolidierten Graphitdicke Fangformen (66, 67, 68) gedruckt werden, die frontale Abmessungen von zwischen 10 µm und 1 cm und eine Tiefe von zwischen 1 mm und 1 cm aufweisen.

31. - Verbundgegenstand, der mindestens zwei getrennte Teile umfaßt, die unterschiedliche Eigenschaften und/oder Funktionen haben, **dadurch gekennzeichnet, daß** einer der Teile eine konsolidierte Dicke umfaßt, die über 70 Gewichtsprozent eines neuverdichteten Blähmaterials enthält, das unter den Blähgraphiten gewählt wird, und daß ein anderer Teil eine andere konsolidierte Dicke umfaßt, die über 70 Gewichtsprozent eines anderen neu verdichteten Blähmaterials enthält, das unter den Blähvermiculiten gewählt wird.

32. - Gegenstand nach Anspruch 31, **dadurch gekennzeichnet, daß** es sich um eine elektrochemische Zelle (1) handelt, und **dadurch**, daß er mindestens eine neu verdichtete konsolidierte Vermiculitdicke (2a) umfaßt, die zwischen zwei konsolidierten neu verdichteten Blähgraphitdicken (3a, 4a) eingesetzt wird.

33. - Gegenstand nach Anspruch 32, **dadurch gekennzeichnet, daß** die konsolidierten Graphitdicken eine Dichte von zwischen 30 und 60 kg/m³ aufweisen.

34. - Gegenstand nach einem der vorstehenden Ansprüche 32 oder 33, **dadurch gekennzeichnet, daß** mindestens eine (13, 12) der konsolidierten Graphitdicken auf einer Fläche, der sogenannten Innenfläche, Mikrorillen (14, 15) aufweist, die zur Vermiculitdicke hin ausgerichtet ist.

35. - Gegenstand nach einem der vorstehenden Ansprüche 32 bis 34, **dadurch gekennzeichnet, daß** mindestens eine der konsolidierten Graphitdicken Heiz-/Kühlorgane einbindet.

36. - Gegenstand nach einem der vorstehenden Ansprüche 32 bis 35, **dadurch gekennzeichnet, daß** mindestens eine der konsolidierten Graphitdicken auf mindestens einer Außenfläche offene hohle gedruckte Formen (16, 17) aufweist, sogenannte Fangformen, die für das Einfangen der Infrarotwellen geeignet sind.

37. - Gegenstand nach Anspruch 36, **dadurch gekennzeichnet, daß** die Fangformen mindestens eine frontale Abmessung von zwischen 1 µm und 5 mm und eine Tiefe von zwischen 1 µm und 1 mm aufweisen.

38. - Gegenstand nach einem der vorstehenden Ansprüche 32 bis 37, **dadurch gekennzeichnet, daß** die konsolidierte Vermiculitdicke gefriergetrocknete Enzyme umfaßt.

39. - Gegenstand nach Anspruch 31, **dadurch gekennzeichnet, daß** es sich um eine Gießform (20) handelt, und daß sie mindestens eine konsolidierte neu verdichtete Blähgraphitdicke (32a) umfaßt, die einen Abdruck (29) begrenzt, der einem durch Gießen zu reproduzierenden Gegenstand entspricht, und eine konsolidierte Blähvermiculitdicke (31a), die die besagte Graphitdicke mindestens teilweise überdeckt.

40. - Gegenstand nach Anspruch 39, **dadurch gekennzeichnet, daß** es sich um eine Gießform handelt, und daß die konsolidierte Graphitdicke eine Dichte von über 100 kg/m³ aufweist.

41. - Gegenstand nach einem der vorstehenden Ansprüche 39 oder 40, **dadurch gekennzeichnet, daß** die konsolidierte Graphitdicke Heiz-/Kühlorgane einbindet.

42. - Gegenstand nach einem der vorstehenden Ansprüche 39 oder 40, **dadurch gekennzeichnet, daß** die konsolidierte Graphitdicke (32a) mindestens ein Röhrensystem (27, 28) umfaßt, das direkt in der Graphitmasse geformt wird und für die Aufnahme eines Heiz-/Kühlmediums geeignet ist.

43. - Gegenstand nach einem der vorstehenden Ansprüche 39 bis 42, **dadurch gekennzeichnet, daß** die konsolidierte Graphitdicke mindestens eine Fläche, die sogenannte Außenfläche, aufweist, die bei der Benutzung der Gießform sichtbar bleibt, und daß mindestens eine Außenfläche der konsolidierten Graphitdicke offene hohl gedruckte Formen aufweist, die sogenannten Fangformen, die zum Fangen der Infrarotwellen geeignet sind.

44. - Gegenstand nach Anspruch 43, **dadurch gekennzeichnet, daß** die Fangformen mindestens eine frontale Abmessung von zwischen 1 mm und 2 cm und eine Tiefe von zwischen 1 mm und 10 cm aufweisen.

45. - Gegenstand nach Anspruch 31, **dadurch gekennzeichnet, daß** es sich um einen heliothermischen Wandler (50) handelt, und daß er mindestens eine neu verdichtete konsolidierte Blähgraphitdicke (56) umfaßt, die mindestens ein Röhrensystem (54) umfaßt, das geeignet ist, ein wärmeführendes Medium aufzunehmen, und eine neu verdichtete konsolidierte Blähvermiculitdicke (55), die die Graphitdicke überdeckt unter Ausnahme mindestens einer Fläche der letzteren, der sogenannten Absorptionsfläche.

46. - Gegenstand nach Anspruch 45, **dadurch gekennzeichnet, daß** das/die Röhrensystem(e) (61) direkt in der Graphitmasse geformt wird/werden.

47. - Gegenstand nach Anspruch 45, **dadurch gekennzeichnet, daß** das Röhrensystem aus einem oder mehreren Rohren (54) besteht, die aus der Graphitdicke genommen werden.

48. - Gegenstand nach einem der vorstehenden Ansprüche 45 bis 47, **dadurch gekennzeichnet**, das die konsolidierte Graphitdicke auf ihrer Absorptionsfläche (70) offene hohl gedruckte Formen (66, 67, 68), die sogenannten Fangformen, aufweist, die für das Fangen der Infrarotwellen geeignet sind.

49. - Gegenstand nach Anspruch 48, **dadurch gekennzeichnet, daß** die Fangformen mindestens eine frontale Abmessung von zwischen 10 µm und 1 cm und eine Tiefe von zwischen 1 mm und 1 cm aufweisen.
